(19) **Europäisches Patentamt / European Patent Office / Office européen des brevets**

(11) **EP 3 323 183 B1**

(12) # EUROPÄISCHE PATENTSCHRIFT

(45) Veröffentlichungstag und Bekanntmachung des Hinweises auf die Patenterteilung:
**24.07.2019 Patentblatt 2019/30**

(21) Anmeldenummer: **16762758.7**

(22) Anmeldetag: **31.08.2016**

(51) Int Cl.:
*H02J 3/14* (2006.01)    *H02J 3/38* (2006.01)

(86) Internationale Anmeldenummer:
**PCT/EP2016/070517**

(87) Internationale Veröffentlichungsnummer:
**WO 2017/063785 (20.04.2017 Gazette 2017/16)**

(54) **VERFAHREN ZUR RECHNERGESTÜTZTEN STEUERUNG DER LEISTUNG IN EINEM ELEKTRISCHEN STROMNETZ**

METHOD FOR COMPUTER-SUPPORTED CONTROL OF THE POWER IN AN ELECTRICAL POWER SUPPLY NETWORK

PROCÉDÉ DE COMMANDE, ASSISTÉE PAR ORDINATEUR, DE LA PUISSANCE DANS UN RÉSEAU DE COURANT ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.10.2015 DE 102015219808**

(43) Veröffentlichungstag der Anmeldung:
**23.05.2018 Patentblatt 2018/21**

(73) Patentinhaber: **Siemens Aktiengesellschaft 80333 München (DE)**

(72) Erfinder:
• **MÜNZ, Ulrich**
  **Plainsboro, NY 08536 (US)**
• **METZGER, Michael**
  **85570 Markt Schwaben (DE)**
• **WOLFRUM, Philipp**
  **81539 München (DE)**

(56) Entgegenhaltungen:
**US-A1- 2010 145 533    US-A1- 2014 265 574**

**EP 3 323 183 B1**

**Beschreibung**

Die Erfindung betrifft ein Verfahren zur rechnergestützten Steuerung der elektrischen Leistung in einem elektrischen Stromnetz sowie eine entsprechende Vorrichtung. Unter Leistung ist hier und im Folgenden Wirkleistung zu verstehen. Unter einem Stromnetz ist hier und im Folgenden ein Wechselstromnetz (ein- oder mehrphasiges Wechselstromsystem) zu verstehen.

In elektrischen Stromnetzen werden heutzutage vermehrt regenerative Energieerzeuger, wie Photovoltaik- und Windkraftanlagen, eingesetzt. Aufgrund der unsicheren Vorhersage der elektrischen Leistung solcher regenerativer Anlagen sowie eines variablen Energieverbrauchs im Stromnetz kann die an verschiedenen Knoten des Stromnetzes nutzbaren Erzeugungskapazitäten oftmals nur geschätzt werden. Es ist deshalb schwierig, in optimaler Weise Regelleistung in der Form von Primärregelleistung und Sekundärregelleistung vorzuhalten und dabei gleichzeitig einen stabilen Netzbetrieb zu gewährleisten.

US 2014/0265574 A1 offenbart ein Verfahren zur Optimierung des Leistungsflusses in einem elektrischen Stromnetz.

Aufgabe der Erfindung ist es deshalb, ein Verfahren zur rechnergestützten Steuerung der Leistung in einem elektrischen Stromnetz zu schaffen, mit dem auch bei Unsicherheiten in der Vorhersage der elektrischen Einspeiseleistung bzw. Leistungserzeugung einzelner Knoten Primärregelleistung und Sekundärregelleistung bereitgestellt wird und gleichzeitig ein stabiler Netzbetrieb sichergestellt ist.

Diese Aufgabe wird durch das Verfahren gemäß Patentanspruch 1 gelöst. Weiterbildungen der Erfindung sind in den abhängigen Ansprüchen definiert.

Mit dem erfindungsgemäßen Verfahren wird die elektrische Leistung in einem elektrischen Stromnetz gesteuert. Das Stromnetz weist in an sich bekannter Weise eine vorgegebene Nennfrequenz auf, die z.B. bei 50 Hz liegt. Das Stromnetz umfasst eine Mehrzahl von über Stromleitungen miteinander verbundenen Knoten, welche jeweils einen ersten Energieerzeuger aus einer oder mehreren nicht-regenerativen Energieerzeugungsanlagen und/oder einen zweiten Energieerzeuger aus einer oder mehreren regenerativen Energieerzeugungsanlagen und/oder einen Verbraucher aus einer oder mehreren Energieverbrauchseinheiten umfassen. Hier und im Folgenden sind unter Energieerzeugern bzw. Energieerzeugungsanlagen elektrische Energieerzeuger bzw. elektrische Energieerzeugungsanlagen zu verstehen. Die nicht-regenerativen Energieerzeugungsanlagen sind in der Regel thermische Kraftwerke, welche, z.B. über fossile Brennstoffe erzeugte, thermische Energie in elektrische Energie umwandeln. Die regenerativen Energieerzeugungsanlagen sind demgegenüber z.B. Photovoltaik- bzw. Windkraftanlagen.

In dem Stromnetz sind sowohl ein oder mehrere erste und zweite Energieerzeuger als auch ein oder mehrere Energieverbraucher enthalten. Für einen jeweiligen Knoten ist eine Leistungsschätzung vorgegeben, welche sich aus einer Schätzung der zukünftigen bezogenen Leistung (Last) des Energieverbrauchers (sofern im Knoten vorhanden) und einer Schätzung der zukünftig erzeugten regenerativen Leistung des zweiten Energieerzeugers (sofern vorhanden) im jeweiligen Knoten zusammensetzt. Sollte der jeweilige Knoten keinen Energieverbraucher bzw. keinen zweiten Energieerzeuger enthalten, wird die entsprechende Schätzung der Last bzw. Leistung auf null gesetzt.

Ferner sind in dem Stromnetz Schwankungen bzw. Unsicherheiten der Leistungsschätzungen erster Art für die jeweiligen Knoten in einem ersten vorgegebenen Toleranzbereich zugelassen sowie Schwankungen bzw. Unsicherheiten der Leistungsschätzungen zweiter Art für die jeweiligen Knoten in einem zweiten vorgegebenen Toleranzbereich. Die Schwankungen erster Art sind dabei durch Primärregelleistung im Stromnetz zu kompensieren und die Schwankungen zweiter Art durch Sekundärregelleistung.

Die Begriffe der Primärregelleistung und der Sekundärregelleistung sind dem Fachmann hinlänglich bekannt. Mit der Primärregelleistung werden schnelle Frequenzschwankungen ausgeglichen. Die Bereitstellung der Primärregelleistung erfolgt meist über eine Proportionalregelung, bei der die Primärregelleistung proportional zu der Abweichung der Netzfrequenz im Stromnetz von der Nennfrequenz generiert wird. Im Gegensatz zur Primärregelleistung, die auf einer Zeitskala von Sekunden zur Verfügung steht, wird die Sekundärregelleistung auf einer längeren Zeitskala von mehreren Minuten bereitgestellt. Demzufolge werden die Schwankungen erster Art, die plötzlich auftreten und daher meist kleiner sind, über Primärregelleistung kompensiert, während die Schwankungen zweiter Art, die meist über längere Zeiträume von z.B. 15 Minuten entstehen und somit langsamer und größer sind, über Sekundärregelleistung kompensiert werden.

Im erfindungsgemäßen Verfahren wird in einem Schritt a) zunächst ein stationärer Zustand des Stromnetzes modelliert, in dem sich eine stationäre Netzfrequenz für alle Spannungen bzw. Spannungszeiger der Knoten im Stromnetz einstellt. In einem Schritt b) wird ein Optimierungsproblem gelöst. Basierend auf der Lösung des Optimierungsproblems werden mittels des modellierten stationären Zustands in Abhängigkeit von den Leistungsschätzungen sowie dem ersten und zweiten Toleranzbereich (vorzuhaltenden) Primärregelleistungen und (vorzuhaltenden) Sekundärregelleistungen den jeweiligen Knoten derart zugewiesen (d.h. in den jeweiligen Knoten derart eingestellt), dass die Abweichung der stationären Netzfrequenz von der Nennfrequenz und die Leistung auf den Stromleitungen begrenzt ist. Durch Berücksichtigung des ersten und zweiten Toleranzbereichs gelten die Begrenzung der Abweichung der stationären Netzfrequenz von der Nennfrequenz und die Begrenzung der Leistung auf den Stromleitungen für alle zulässigen Leistungen bzw. Lasten innerhalb des ersten bzw. zweiten Toleranzbereichs.

Erfindungsgemäß fließen in das Optimierungsproblem die Nebenbedingungen einer begrenzten Frequenzabweichung sowie einer Leistungsbegrenzung der Stromleitungen ein. Dabei sind entsprechende Schwellwertkriterien für die Frequenzabweichung sowie die Leistungsbegrenzung festgelegt. Solchen Knoten, welche keine Primär- bzw. Sekundärregelleistung bereitstellen können, wird eine Primär- bzw. Sekundärregelleistung von null zugewiesen. Die Primärregelleistung wird vorzugsweise durch die ersten Energieerzeuger bereitgestellt, kann jedoch gegebenenfalls auch durch zweite Energieerzeuger vorgehalten werden. Das Gleiche gilt für die Sekundärregelleistung.

Das erfindungsgemäße Verfahren zeichnet sich durch eine geeignete Definition eines Optimierungsproblems basierend auf einem modellierten stationären Zustand des Stromnetzes aus. Über die Lösung des Optimierungsproblems wird durch entsprechende Nebenbedingungen ein stabiler Netzbetrieb gewährleistet und gleichzeitig die Bereitstellung von Primärregelleistung und Sekundärregelleistung auch bei Abweichungen der Energieerzeugung und des Energieverbrauchs von den Schätzwerten innerhalb der Toleranzbereiche gewährleistet.

In einer bevorzugten Ausführungsform des erfindungsgemäßen Verfahrens werden in Schritt b) neben der Zuweisung der Primärregelleistungen und der Sekundärregelleistungen zu den jeweiligen Knoten geplante Leistungen der ersten (nicht-regenerativen) Energieerzeuger der Knoten bestimmt und entsprechend eingestellt, so dass die Abweichung der stationären Netzfrequenz von der Nennfrequenz und die Leistung auf den Stromleitungen begrenzt ist. In die Lösung des Optimierungsproblems fließt somit als weitere zu optimierende Größe die zukünftige Verteilung der Leistung der ersten Energieerzeuger ein. Falls die Leistung eines ersten Energieerzeugers vorab festgelegt und nicht manipulierbar ist, entspricht dessen geplante Leistung der vorab festgelegten Leistung.

In einer weiteren Variante des erfindungsgemäßen Verfahrens ist das Optimierungsproblem als eine Optimierung einer Kostenfunktion definiert, welche eine Summe von mehreren Kostentermen enthält. Die Kostenterme umfassen dabei einen ersten Kostenterm für die den jeweiligen Knoten zugewiesenen Primärregelleistungen oder Abweichungen dieser Primärregelleistungen von vorgegebenen Sollwerten und/oder einen zweiten Kostenterm für die den jeweiligen Knoten zugewiesenen Sekundärregelleistungen oder Abweichungen dieser Sekundärregelleistungen von vorgegebenen Sollwerten. In einer bevorzugten Variante ist das Optimierungsproblem dabei als eine Minimierung der Kostenfunktion definiert, wobei der erste und der zweite Kostenterm durch positive Werte repräsentiert werden. Vorzugsweise hängt der erste Kostenterm linear oder quadratisch von den Primärregelleistungen bzw. den Abweichungen dieser Primärregelleistungen von den vorgegebenen Sollwerten ab. Analog hängt vorzugsweise auch der zweite Kostenterm linear oder quadratisch von den Sekundärregelleistungen bzw. den Abweichungen dieser Sekundärregelleistungen von vorgegebenen Sollwerten ab. In der speziellen Beschreibung sind Beispiele für mögliche Kostenfunktionen gegeben.

In einer weiteren, besonders bevorzugten Ausführungsform, bei der auch geplante erzeugte Leistungen der ersten Energieerzeuger bestimmt werden, umfasst die Kostenfunktion ferner einen dritten Kostenterm für die geplanten erzeugten Leistungen der ersten Energieerzeuger oder für Abweichungen dieser Leistungen von Sollwerten. Das Optimierungsproblem ist dabei vorzugsweise wiederum als eine Minimierung der Kostenfunktion definiert, wobei der dritte Kostenterm in diesem Fall ein positiver Wert ist. Vorzugsweise hängt dieser Kostenterm linear oder quadratisch von den geplanten erzeugten Leistungen der ersten Energieerzeuger bzw. den Abweichungen dieser Leistungen von den Sollwerten ab.

In einer weiteren, besonders bevorzugten Ausführungsform wird der stationäre Zustand des Stromnetzes in Schritt a) basierend auf Lastflussgleichungen für die in den jeweiligen Knoten auftretenden Leistungen modelliert. Die Beschreibung eines stationären Zustands eines Stromnetzes mittels Lastflussgleichungen ist an sich bekannt. In einer besonders bevorzugten Ausführungsform werden dabei die sog. DC-Lastflussgleichungen (DC Approximation) verwendet, welche auch in der speziellen Beschreibung angegeben sind. Mittels der Lastflussgleichungen wird eine einfache und recheneffiziente Modellierung des Stromnetzes erreicht.

In einer weiteren bevorzugten Ausführungsform des erfindungsgemäßen Verfahrens ist der erste Toleranzbereich derart definiert, dass die Schwankung erster Art der Leistungsschätzung für jeden Knoten in einem vorbestimmten Toleranzintervall liegt. Alternativ oder zusätzlich ist auch der zweite Toleranzbereich derart definiert, dass die Schwankung zweiter Art der Leistungsschätzung für jeden Knoten in einem vorbestimmten Toleranzintervall liegt. Mit anderen Worten werden für die einzelnen Knoten unabhängig voneinander Toleranzintervalle für die Schwankungen der Leistungsschätzung festgelegt.

In einer weiteren Variante des erfindungsgemäßen Verfahrens ist der erste Toleranzbereich derart definiert, dass eine Summe und insbesondere eine gewichtete Summe der Schwankungen erster Art der Leistungsschätzungen für alle Knoten kleiner oder kleiner gleich einem vorbestimmten Wert ist. Alternativ oder zusätzlich ist auch der zweite Toleranzbereich derart definiert, dass eine Summe und insbesondere eine gewichtete Summe der Schwankungen zweiter Art der Leistungsschätzungen für alle Knoten kleiner oder kleiner gleich einem vorbestimmten Wert ist. In dieser Variante hängen die Toleranzen für die Schwankungen der Leistungsschätzungen der einzelnen Knoten voneinander ab.

In einer weiteren Variante des erfindungsgemäßen Verfahrens wird bei der Lösung des Optimierungsproblems die (weitere) Nebenbedingung berücksichtigt, dass die geplanten Leistungen der ersten Energieerzeuger und/oder die den jeweiligen Knoten zugewiesenen Primärregelleistungen und/oder Sekundärregelleistungen begrenzt sind.

In einer weiteren, besonders bevorzugten Ausführungsform wird das Optimierungsproblem im Rahmen dessen Lösung in ein konvexes Optimierungsproblem gewandelt. Ein konvexes Optimierungsproblem zeichnet sich dadurch aus, dass das entsprechende Optimum (vorzugsweise ein Minimum) ein globales Optimum ist. Ein solches Optimierungsproblem kann besonders einfach und effizient mit an sich bekannten Verfahren, wie z.B. dem Innere-Punkte-Verfahren, gelöst werden.

Neben dem oben beschriebenen Verfahren betrifft die Erfindung eine Vorrichtung zur rechnergestützten Steuerung der elektrischen Leistung in einem elektrischen Stromnetz, wobei die Vorrichtung ein oder mehrere Mittel zur Durchführung des erfindungsgemäßen Verfahrens bzw. einer oder mehrerer Varianten des erfindungsgemäßen Verfahrens umfasst.

Die Erfindung betrifft darüber hinaus ein elektrisches Stromnetz, welches die oben beschriebene erfindungsgemäße Vorrichtung zur Steuerung der elektrischen Leistung im Stromnetz umfasst.

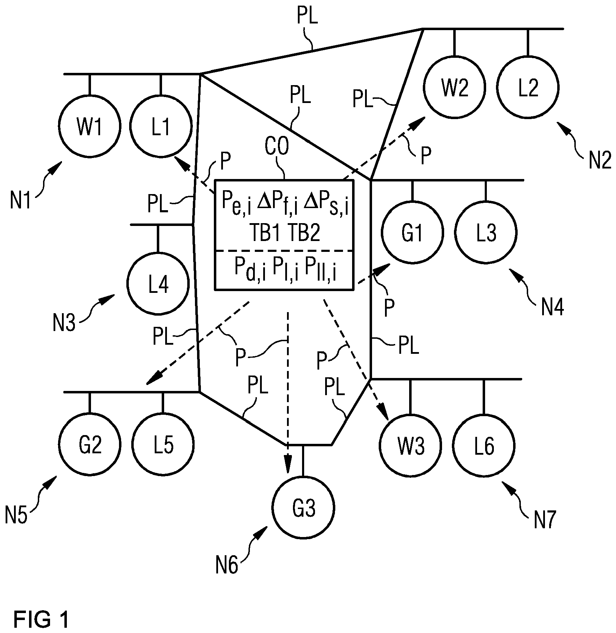

Ausführungsbeispiele der Erfindung werden nachfolgend anhand der beigefügten Fig. 1 detailliert beschrieben. Diese Figur zeigt beispielhaft ein Stromnetz, in dem die Leistung gemäß einer Ausführungsform des erfindungsgemäßen Verfahrens gesteuert wird.

In Fig. 1 ist schematisch ein Wechselstromnetz mit mehreren Bussen bzw. Knoten N1 bis N7 gezeigt, die über Stromleitungen PL miteinander vernetzt sind. Die Knoten können je nach Ausgestaltung einen nicht-regenerativen Energieerzeuger (d.h. ein oder mehrere thermische Kraftwerke) und/oder einen regenerativen Energieerzeuger (d.h. ein oder mehrere regenerative Energieerzeugungsanlagen, wie z.B. Photovoltaik- oder Windkraftanlagen) und/oder einen Energieverbraucher bzw. eine Last (d.h. ein oder mehrere Energieverbrauchseinheiten) umfassen. In dem Beispiel der Fig. 1 enthält der Knoten N1 den regenerativen Energieerzeuger W1 und die Last L1, der Knoten N2 den regenerativen Energieerzeuger W2 und die Last L2, der Knoten N3 die Last L4, der Knoten N4 den nicht-regenerativen Energieerzeuger G1 und die Last L3, der Knoten N5 den nicht-regenerativen Energieerzeuger G2 und die Last L5, der Knoten N6 den nicht-regenerativen Energieerzeuger G3 und der Knoten N7 den regenerativen Energieerzeuger W3 und die Last L6.

Zur Umsetzung der Erfindung ist eine Steuervorrichtung CO vorgesehen, welche die erfindungsgemäß ermittelten Leistungswerte an die einzelnen Knoten gibt, welche dann entsprechend der Leistungswerte eingestellt werden. Die Übermittlung der Leistungswerte ist in Fig. 1 durch gestrichelte Pfeile P angedeutet.

Als Eingangsgrößen der hier beschriebenen Ausführungsform verwendet die Steuervorrichtung CO geschätzte Leistungen $P_{e,i}$ der einzelnen Knoten sowie einen ersten Toleranzbereich TB1 für schnelle Leistungsschwankungen $\Delta P_{f,i}$ der einzelnen Knoten und einen zweiten Toleranzbereich TB2 für langsame Leistungsschwankungen $\Delta P_{s,i}$ der einzelnen Knoten. Hier und im Folgenden bezeichnet i den Index der Nummerierung der einzelnen Knoten, d.h. für das Beispiel der Fig. 1 gilt i = 1, ..., 7. Die genannten Eingangsgrößen werden weiter unten im Detail erläutert.

Als Ausgangsgrößen werden über die Steuervorrichtung CO geplante erzeugte Leistungen $P_{d,i}$ der nicht-regenerativen Energieerzeuger der einzelnen Knoten (sofern darin vorhanden) sowie vorzuhaltende Primärregelleistungen $P_{I,i}$ und Sekundärregelleistungen $P_{II,i}$ für einen vorgegebenen Zeithorizont (d.h. eine zukünftige Zeitspanne) bestimmt und die Knoten entsprechend eingestellt. Die Primärregelleistung und die Sekundärregelleistung können je nach Art des Stromnetzes nur durch die nicht-regenerativen Energieerzeuger oder ggf. auch durch regenerative und nicht-regenerative Energieerzeuger vorgehalten werden.

Die hier beschriebene Ausführungsform der Erfindung zeichnet sich durch eine Formulierung und geeignete Lösung eines Optimierungsproblems aus, welches wie folgt lautet:

Es wird von einem Stromnetz ausgegangen, welches Schätzungen $P_{e,i}$ für die zukünftige Leistung der regenerativen Energieerzeuger und die zukünftige Last enthält, wobei ferner Toleranz- bzw. Unsicherheitsbereiche TB1 und TB2 für Schwankungen dieser Schätzungen vorgegeben sind. Der Unsicherheitsbereich TB1 betrifft dabei schnelle Leistungsschwankungen $\Delta P_{f,i}$, die über Primärregelleistung zu kompensieren sind, und der Unsicherheitsbereich TB2 betrifft langsamere Leistungsschwankungen $\Delta P_{s,i}$, welche über Sekundärregelleistung zu kompensieren sind. Ausgehend von diesem Stromnetz wird ein Optimierungsproblem gelöst, so dass die geplanten erzeugten Leistungen $P_{d,i}$ der nicht-regenerativen Energieerzeuger sowie die Zuweisung von Primärregelleistung und Sekundärregelleistung zu entsprechenden Knoten derart festgelegt ist, dass in einem stationären Zustand des Stromnetzes die maximale Frequenzabweichung der Netzfrequenz des Stromnetzes von seiner Nennfrequenz sowie die Leistung auf den Stromleitungen PL innerhalb vorbestimmter Grenzen bleiben und dies für beliebige Abweichungen von Leistungserzeugung und Last innerhalb der Toleranz- bzw. Unsicherheitsbereiche TB1 und TB2 gilt.

Im Folgenden wird die Planung der Leistung der nicht-regenerativen Energieerzeuger über einen festen Zeithorizont betrachtet. Dieser Zeithorizont liegt beispielsweise bei 24 Stunden, wobei z.B. alle 15 Minuten die entsprechenden Leistungswerte basierend auf dem erfindungsgemäßen Verfahren ermittelt werden. Ein stabiler Netzzustand liegt dabei dann vor, wenn die maximale Abweichung der Netzfrequenz von der Nennfrequenz unter einer vorbestimmten Schwelle liegt und in gleicher Weise die maximale Phasendifferenz über jede Stromleitung begrenzt ist, wodurch eine Überlastung der Stromleitungen vermieden wird.

Ausgangspunkt des hier beschriebenen Verfahrens ist die rechnergestützte Modellierung eines stationären Zustands des Stromnetzes. Das Stromnetz umfasst dabei N Busse bzw. Knoten sowie M Stromleitungen. Der stationäre Zustand wird mittels der an sich bekannten linearisierten DC-Lastflussgleichungen modelliert, welche die erzeugte Wirkleistung in jedem Knoten in Abhängigkeit von Spannungen und Phasendifferenzen beschreiben. Im Folgenden wird ferner der Index $t_n$ verwendet, der die entsprechenden Größen zu Zeitpunkten innerhalb des oben erwähnten Zeithorizonts definiert. Die DC-Lastflussgleichungen lauten wie folgt:

$$P_i^{t_n} = - \sum_{k \in N_i} b_{ik} v_i^{t_n} v_k^{t_n} \left( \theta_k^{t_n} - \theta_i^{t_n} \right) \qquad (1)$$

Diese Summe umfasst alle benachbarten Knoten bzw. Busse $k \in N_i$, die mit dem Knoten i über eine Stromleitung mit der Suszeptanz $b_{ik} < 0$ direkt verbunden sind. $P_i^{t_n}, \ v_i^{t_n}, \ \theta_i^{t_n}$ bezeichnen die Wirkleistung, die Spannungsamplitude und die Phase an jedem Knoten i für die diskreten Zeitpunkte $t_n$. Im Folgenden werden nur Stromübertragungssysteme betrachtet, bei denen die Suszeptanz der Stromleitungen deren Konduktanz dominiert, so dass die DC-Lastflussgleichung den tatsächlichen Lastfluss gut approximiert. Wie bei DC-Lastflussgleichungen üblich sind alle $v_i$ konstant und es gilt $v_i^{t_n} = v_i \ 1$ für alle $t_n$.

Die obigen DC-Lastflussgleichungen (1) beschreiben ein verlustloses System, d.h. es gilt:

$$\sum_{i=1}^{N} P_i^{t_n} = - \sum_{i=1}^{N} \sum_{k \in N_i} b_{ik} v_i v_k \left( \theta_k^{t_n} - \theta_i^{t_n} \right) = 0 \qquad (2)$$

Die Gesamtleistung, die an einem Knoten i auftritt, lautet wie folgt:

$$P_i^{t_n} = P_{e,i}^{t_n} + P_{d,i}^{t_n} + P_{II,i}^{t_n} + P_{I,i}^{t_n} + \Delta P_{s,i}^{t_n} + \Delta P_{f,i}^{t_n} \qquad (3)$$

Dabei gilt $P_i^{t_n} > 0$, falls in dem Knoten i zum Zeitpunkt $t_n$ mehr Leistung erzeugt als konsumiert wird. Ansonsten gilt $P_i^{t_n} \leq 0$. Ferner sind die Größen in Gleichung (3) wie folgt definiert:

- $P_{e,i}^{t_n}$ ist eine Leistungsschätzung am Knoten i zum Zeitpunkt $t_n$, wobei sich die Leistungsschätzung aus der Last (sofern vorhanden) sowie der erzeugten regenerativen Leistung des regenerativen Energieerzeugers (sofern vorhanden) zusammensetzt.

- $P_{d,i}^{t_n}$ stellt die geplante erzeugte Leistung des nicht-regenerativen Energieerzeugers (sofern vorhanden) im Knoten i zum Zeitpunkt $t_n$ dar.

- $P_{II,i}^{t_n}$ ist die Sekundärregelleistung, die am Knoten i zum Zeitpunkt $t_n$ bereitgestellt bzw. vorgehalten wird (sofern vorhanden).

- $P_{I,i}^{t_n}$ ist die Primärregelleistung, die am Knoten i zum Zeitpunkt $t_n$ bereitgestellt bzw. vorgehalten wird (sofern vorhanden).

- $\Delta P_{s,i}^{t_n}$ und $\Delta P_{f,i}^{t_n}$ beschreiben die Unsicherheit bzw. Schwankung der Last und der erzeugten regenerativen Leistung gegenüber der Schätzung $P_{e,i}^{t_n}$ am Knoten i zum Zeitpunkt $t_n$. Dabei betrifft $P_{s,i}^{t_n}$ langsame Unsicherheiten bzw. Schwankungen, die beispielsweise innerhalb weniger Minuten auftreten und über die Sekundärregelleistung zu kompensieren sind. Demgegenüber betrifft $P_{f,i}^{t_n}$ schnelle Schwankungen bzw. Unsicherheiten, die z.B. innerhalb von Sekunden auftreten und über die Primärregelleistung kompensiert werden. In der Regel gilt $\Delta P_{f,i}^{t_n} < \Delta P_{s,i}^{t_n}$.

Die Sekundärregelleistung bewirkt einen Ausgleich der Leistungen über die Anpassung der Erzeugung der Wirkleistung an langsame Variationen der Last bzw. der regenerativen Leistungen. Dies kann über die Integration der Frequenzabweichung $\Delta f^{t_n} = f^{t_n} - f_0$ von der Nennfrequenz $f_0$ des Stromnetzes erreicht werden, um die erforderliche Leistungsanpassung zu bestimmen, wenn $\Delta f^{t_n}$ null wird. Die resultierende Anpassung der Wirkleistung muss über die verschiedenen Energieerzeuger verteilt werden. Der Algorithmus zur Einstellung der Sekundärregelleistung hat kürzere Ausführungsintervalle als der erfindungsgemäße Optimierungsalgorithmus, z.B. eine Minute. Demzufolge muss die Verteilung der Sekundärregelleistung vorab bestimmt werden, d.h. ohne die Information über die genaue Verteilung von $\Delta P_{s,i}^{t_n}$. Die Aktivierung der Sekundärregelleistung hängt jedoch von der Größe der Variation der Last und der erzeugten regenerativen Leistung ab, d.h. von $\sum_{i=1}^{N} \Delta P_{s,i}^{t_n}$. Es ist ein Vorteil des hier beschriebenen Verfahrens, dass die Sekundärregelleistung lediglich auf der gesamten Variation $\sum_{i=1}^{N} \Delta P_{s,i}^{t_n}$ beruht und die genaue Verteilung der Variation $\Delta P_{s,i}^{t_n}$ nicht bekannt sein muss. Die Gesamtvariation kann verhältnismäßig einfach beispielsweise durch Integration der Frequenzabweichung $\Delta f^{t_n}$ ermittelt werden. Deshalb wird in der hier beschriebenen Ausführungsform die Verteilung der Sekundärregelleistung wie folgt modelliert:

$$P_{II,i}^{t_n} = -k_{S,i}^{t_n} \sum_{j=1}^{N} \Delta P_{s,j}^{t_n}, \quad \sum_{i=1}^{N} k_{S,i}^{t_n} = 1 \qquad (4)$$

Ein Ziel der nachfolgend beschriebenen Optimierung ist dabei eine optimale Bestimmung der Verteilung $k_{S,i}^{t_n}$ der Sekundärregelleistung.

Die obige Gleichung (4) impliziert folgende Bedingung:

$$\sum_{i=1}^{N} \left( P_{II,i}^{t_n} + \Delta P_{s,i}^{t_n} \right) = 0 \qquad (5)$$

Das heißt, die Schwankungen $\Delta P_{s,i}^{t_n}$ werden durch die Sekundärregelleistung $P_{II,i}^{t_n}$ vollständig ausgeglichen. Wie bekannt, reagiert die Primärregelleistung viel schneller als die Sekundärregelleistung, und zwar auf einer Zeitskala, die von der Abweichung der Netzfrequenz von der Nennfrequenz abhängt. Die Primärregelleistung wird dabei in an sich bekannter Weise über die folgende Proportionalregelung beschrieben:

$$P_{I,i}^{t_n} = -k_{P,i}^{t_n} \Delta f^{t_n} \qquad (6)$$

Dabei bezeichnet $P_{I,i}^{t_n}$ die Primärregelleistung, die am Knoten i zum Zeitpunkt $t_n$ bereitgestellt wird, wie bereits oben erwähnt wurde. Diese Primärregelleistung ist proportional zu den Frequenzabweichungen $\Delta f^{t_n}$, was über den Proportionalitätsfaktor (auch als Droop-Gain bezeichnet) $k_{P,i}^{t_n} \geq 0$ erreicht wird. Dieser Proportionalitätsfaktor $k_{P,i}^{t_n}$ umfasst herkömmlicherweise die zwei folgenden unabhängigen Aspekte:

- Netz- und Systemregeln, d.h. wie eine Frequenzabweichung $\Delta f^{tn}$ in das Verhältnis der tatsächlich bereitgestellten Primärregelleistung zu der maximal verfügbaren Primärregelleistung (d.h. $\bar{P}_{I,i}^{t_n}/P_{I,i,max}^{t_n}$) übersetzt wird.

- Die maximale Primärregelleistung $P_{I,i,max}^{t_n}$, welche der Knoten i bereitstellen kann, z.B. bei der maximalen Frequenzabweichung $\Delta f^{tn} = \overline{\Delta f} = 0,18\ Hz$, wobei die von einzelnen Energieerzeugern bereitzustellende Primärregelleistung derzeit in Europa über Auktionen bestimmt wird.

Im Folgenden wird ferner angenommen, dass die über die nicht-regenerativen Energieerzeuger erzeugte Leistung und die Leistungsschätzungen ausgeglichen sind, d.h. es gilt:

$$\sum_{i=1}^{N}\left(P_{e,i}^{t_n} + P_{d,i}^{t_n}\right) = 0 \qquad (7)$$

Diese Bedingung ist für alle Zeitpunkte $t_n$ gültig.

Unter der Verwendung der obigen Gleichungen (2), (3), (5) und (7) kann die Frequenzabweichung zum Zeitpunkt $t_n$ wie folgt beschrieben werden:

$$\Delta f^{t_n} = \frac{\sum_{i=1}^{N} \Delta P_{f,i}^{t_n}}{\sum_{i=1}^{N} k_{P,i}^{t_n}} = \frac{\mathbf{1}^T \Delta \mathbf{P}_f^{t_n}}{\mathbf{1}^T \mathbf{k}_P^{t_n}} \qquad (8)$$

Dabei werden im Folgenden dick gedruckte Symbole zur Bezeichnung entsprechender Vektoren verwendet, wie z.B. $\left(\mathbf{k}_P^{t_n}\right)^T = vec\left(k_{P,i}^{t_n}\right)$, $\mathbf{1}^T = (1, 1, 1, ..., 1)$ usw. Somit ergibt sich folgende Primärregelleistung:

$$\mathbf{P}_I^{t_n} = -\mathbf{k}_P^{t_n} \frac{\mathbf{1}^T \Delta \mathbf{P}_f^{t_n}}{\mathbf{1}^T \mathbf{k}_P^{t_n}} \qquad (9)$$

Dies impliziert, dass $\Delta f^{tn} = 0$ gilt, falls $\mathbf{1}^T \Delta \mathbf{P}_f^{t_n} = 0$ gilt. Somit kann die Primärregelleistung nur aktiviert werden, um schnelle Unsicherheiten bzw. Schwankungen der geschätzten Last und/oder regenerativen Einspeiseleistung/Leistungserzeugung zu kompensieren.

Nachfolgend wird die sog. Inzidenzmatrix eines Graphen eingeführt, welche die Topologie des Stromnetzes beschreibt. Diese Inzidenzmatrix lautet wie folgt:

$$B_{i\alpha} = \begin{cases} 1 & falls\ Stromleitung\ \alpha\ beim\ Knoten\ i\ anf\ddot{a}ngt \\ -1 & falls\ Stromleitung\ \alpha\ beim\ Knoten\ i\ endet \\ 0 & ansonsten \end{cases} \qquad (10)$$

Es handelt sich hierbei um eine spärlich besetzte Matrix mit nur zwei Einträgen 1 und -1 in jeder Spalte $\alpha$, wobei die Zeilen Knoten entsprechen, die über die Stromleitung $\alpha$ direkt verbunden sind. Der Ausdruck $B^T\theta$ liefert einen Vektor von der Größe M (Anzahl der Stromleitungen) mit den Einträgen $\theta_i - \theta_j$, welche der Phasendifferenz auf jeder Stromleitung entsprechen.

Zusätzlich wird die diagonale Kopplungsmatrix $\psi = diag(\psi_\alpha) = diag(-b_{ik}v_i v_k)$ definiert, wobei die Stromleitung $\alpha$ die Knoten i und k verbindet. Demzufolge kann die obige Gleichung (1) in Vektorform wie folgt geschrieben werden:

$$\mathbf{P}^{t_n} = B\psi B^T \theta^{t_n} \qquad (11)$$

Durch Kombination der Gleichungen (3), (4), (9) und (11) erhält man folgenden Ausdruck:

$$\mathbf{P}_e^{t_n} + \mathbf{P}_d^{t_n} + \left(\mathbb{I} - \mathbf{k}_S^{t_n}\mathbf{1}^T\right)\Delta\mathbf{P}_S^{t_n} + \left(\mathbb{I} - \frac{\mathbf{k}_P^{t_n}\mathbf{1}^T}{\mathbf{1}^T\mathbf{k}_P^{t_n}}\right)\Delta\mathbf{P}_f^{t_n} = B\psi B^T\theta^{t_n} \qquad (12)$$

Dabei bezeichnet $\mathbb{I}$ die Identitätsmatrix.

Um die Phasendifferenzen der Spannungen über alle Stromleitungen $B^T\theta^n$ explizit zu berechnen, muss eine explizite Lösung für $B^T\theta^n$ in Gleichung (12) gefunden werden. Dies ist nicht trivial, denn $B\psi B^T$ ist eine singuläre Matrix und somit nicht invertierbar. Aus der Konstruktion von $L = B\psi B^T$ geht hervor, dass L eine Laplace-Matrix mit exakt einem Eigenwert von 0 und ansonsten streng positiven Eigenwerten ist. Der linke und der rechte Eigenvektor mit dem Eigenwert 0 ist **1**. Da die linke Seite der Gleichung (12) immer die Bedingung $\mathbf{1}^T\mathbf{P}^{t_n} = 0$ erfüllt, kann die Pseudoinverse von L, bezeichnet als $L^\dagger$, verwendet werden und man erhält folgenden Ausdruck:

$$B^T\theta^{t_n} = B^T L^\dagger \left(\mathbf{P}_e^{t_n} + \mathbf{P}_d^{t_n} + \left(\mathbb{I} - \mathbf{k}_S^{t_n}\mathbf{1}^T\right)\Delta\mathbf{P}_S^{t_n} + \left(\mathbb{I} - \frac{\mathbf{k}_P^{t_n}\mathbf{1}^T}{\mathbf{1}^T\mathbf{k}_P^{t_n}}\right)\Delta\mathbf{P}_f^{t_n}\right)$$

Im Folgenden wird der allgemeine Fall von nicht-identischen, zeitlich konstanten Leistungsbegrenzungen auf den Stromleitungen betrachtet, d.h. es gilt: $\left|\psi_\alpha\left(\theta_i^{t_n} - \theta_k^{t_n}\right)\right| \leq \tilde{\gamma}_\alpha$ für die Stromleitung $\alpha$. Dies wird durch die Verwendung von unterschiedlichen Gewichten $\omega_\alpha = \frac{|\psi_\alpha|}{\tilde{\gamma}_\alpha}$ mit der entsprechenden Gewichtungsmatrix $W = \mathrm{diag}(\omega_\alpha)$ modelliert. Auf diese Weise erhält man folgende Ungleichheitsbedingung:

$$\left|W B^T L^\dagger \left(\mathbf{P}_e^{t_n} + \mathbf{P}_d^{t_n} + \left(\mathbb{I} - \mathbf{k}_S^{t_n}\mathbf{1}^T\right)\Delta\mathbf{P}_S^{t_n} + \left(\mathbb{I} - \frac{\mathbf{k}_P^{t_n}\mathbf{1}^T}{\mathbf{1}^T\mathbf{k}_P^{t_n}}\right)\Delta\mathbf{P}_f^{t_n}\right)\right| < \gamma\mathbf{1} \qquad (13)$$

Dabei bezeichnet $\gamma$ einen skalaren Parameter, der die Stromleitungsbelastung beschreibt. Sobald $\gamma > 1$ gilt, ist wenigstens eine Stromleitung überlastet. Ansonsten gilt $\gamma \leq 1$. Die obige Gleichung (13) beschreibt eine Begrenzung der Leistung auf den Stromleitungen im Sinne der Ansprüche und stellt eine Nebenbedingung des weiter unten formulierten Optimierungsproblems dar.

Im Folgenden wird das eingangs genannte Optimierungsproblem formal beschrieben. Die obige Nebenbedingung gemäß Gleichung (13) sowie die nachfolgenden Umformulierungen können je nach Verwendung des Verfahrens mit unterschiedlichen Kostenfunktionen kombiniert werden. Beispiele für Kostenfunktionen sind wie folgt:

- Für ein Stromnetz ohne einen Markt zum Kaufen und Verkaufen von Energie sowie von Primär- und Sekundärregelleistung kann der Netzbetreiber die gesamte planbare nicht-regenerative Energieerzeugung sowie die Primär- und Sekundärregelleistung direkt in der Kostenfunktion über lineare oder quadratische Kosten berücksichtigen. Ein Beispiel einer linearen Kostenfunktion, welche bei der Lösung des Optimierungsproblems zu minimieren ist, lautet wie folgt:

$$\min \sum_{t_n=0}^{T_n} \mathbf{c}_d^T \mathbf{P}_d^{t_n} + \mathbf{c}_P^T \mathbf{k}_P^{t_n} + \mathbf{c}_S^T \left|\mathbf{k}_S^{t_n}\right| \qquad (14)$$

In gleicher Weise kann auch eine quadratische Kostenfunktion wie folgt definiert werden:

$$\min \sum_{t_n=0}^{T_n} \left(\mathbf{P}_d^{t_n}\right)^T C_d \mathbf{P}_d^{t_n} + \left(\mathbf{k}_P^{t_n}\right)^T C_P \mathbf{k}_P^{t_n} + \left(\mathbf{k}_S^{t_n}\right)^T C_S \mathbf{k}_S^{t_n} \qquad (15)$$

Dabei bezeichnen die Größen $\mathbf{c}_d, c_P, c_S, C_d, C_P, C_S$ die jeweiligen Kosten für feste Leistungsbegrenzungen $\tilde{\gamma}$, und $T_n$ ist der Prädiktionshorizont der Planung der Leistung durch die nicht-regenerativen Energieerzeuger. Die Größen $\mathbf{P}_d^{t_n}$ und $\mathbf{k}_P^{t_n}$ sind als positive Werte konstruiert, so dass Absolutwerte nicht erforderlich sind. In anderen Szenarien können diese Größen auch negativ sein, so dass in diesem Fall Absolutwerte verwendet werden.

- In einem Stromnetz kann es einen Markt für Energie, jedoch nicht für Primär- und Sekundärregelleistung geben. In diesem Fall kann der Netzbetreiber nicht die gesamte nicht-regenerative Erzeugungskapazität verplanen, sondern er muss Modifikationen berücksichtigen, die sich aus dem Handel der Energie auf dem Energiemarkt ergeben. Diese Modifikationen sollten möglichst klein sein. Eine typische lineare Kostenfunktion für diesen Fall lautet wie folgt:

$$\min \sum_{t_n=0}^{T_n} \mathbf{c}_d^T \left|\mathbf{P}_d^{t_n} - \widehat{\mathbf{P}}_d^{t_n}\right| + \mathbf{c}_P^T \mathbf{k}_P^{t_n} + \mathbf{c}_S^T \left|\mathbf{k}_S^{t_n}\right| \qquad (16)$$

Eine typische quadratische Kostenfunktion für diesen Fall lautet wie folgt:

$$\min \sum_{t_n=0}^{T_n} \left(\mathbf{P}_d^{t_n} - \widehat{\mathbf{P}}_d^{t_n}\right)^T C_d \left(\mathbf{P}_d^{t_n} - \widehat{\mathbf{P}}_d^{t_n}\right) + \left(\mathbf{k}_P^{t_n}\right)^T C_P \mathbf{k}_P^{t_n} + \left(\mathbf{k}_S^{t_n}\right)^T C_S \mathbf{k}_S^{t_n} \qquad (17)$$

Dabei bezeichnet $\widehat{\mathbf{P}}_d^{t_n}$ einen Sollwert der nicht-regenerativen Einspeiseleistung/Leistungserzeugung, der sich aus dem Energiemarkt ergibt. Der Kostenterm $c_d^T \left|P_d^{t_n} - \widehat{P}_d^{t_n}\right|$ bzw. $\left(\mathbf{P}_d^{t_n} - \widehat{\mathbf{P}}_d^{t_n}\right)^T C_d \left(\mathbf{P}_d^{t_n} - \widehat{\mathbf{P}}_d^{t_n}\right)$ wird hierbei auch als re-dispatch-Kosten bezeichnet.

- In einem Stromnetz kann ferner sowohl die erzeugte Energie als auch die Primär- und Sekundärregelleistung auf dem Energiemarkt gehandelt werden. In diesem Fall gibt es Sollwerte sowohl für die Einspeiseleistung $\widehat{\mathbf{P}}_d^{t_n}$ als auch für die Primärregelleistung und die Sekundärregelleistung, wobei der Sollwert für die Primärregelleistung durch den Parameter $\hat{\mathbf{k}}_P^{t_n}$ und der Sollwert für die Sekundärregelleistung durch den Parameter $\hat{\mathbf{k}}_S^{t_n}$ repräsentiert wird. Die Modifikationen sollten wieder so klein wie möglich sein. Eine typische lineare Kostenfunktion lautet hierbei wie folgt:

$$\min \sum_{t_n=0}^{T_n} \mathbf{c}_d^T \left|\mathbf{P}_d^{t_n} - \widehat{\mathbf{P}}_d^{t_n}\right| + \mathbf{c}_P^T \left|\mathbf{k}_P^{t_n} - \hat{\mathbf{k}}_P^{t_n}\right| + \mathbf{c}_S^T \left|\mathbf{k}_S^{t_n} - \hat{\mathbf{k}}_S^{t_n}\right| \qquad (18)$$

Eine typische quadratische Kostenfunktion lautet demgegenüber wie folgt:

$$\min \sum_{t_n=0}^{T_n} \left(\mathbf{P}_d^{t_n} - \widehat{\mathbf{P}}_d^{t_n}\right)^T C_d \left(\mathbf{P}_d^{t_n} - \widehat{\mathbf{P}}_d^{t_n}\right) + \left(\mathbf{k}_P^{t_n} - \hat{\mathbf{k}}_P^{t_n}\right)^T C_P \left(\mathbf{k}_P^{t_n} - \hat{\mathbf{k}}_P^{t_n}\right)$$
$$+ \left(\mathbf{k}_S^{t_n} - \hat{\mathbf{k}}_S^{t_n}\right)^T C_S \left(\mathbf{k}_S^{t_n} - \hat{\mathbf{k}}_S^{t_n}\right) \qquad (19)$$

- Gegebenenfalls können auch noch weitere Terme in den obigen Kostenfunktionen berücksichtigt werden, z.B. die Minimierung der Leistungsgrenzen $\gamma$ der Leitungen für vorgegebene Grenzen der nicht-regenerativen Energieerzeugung und der Primär- und Sekundärregelleistung.

Im hier beschriebenen Ausführungsbeispiel wird ein Stromnetz mit der obigen Kostenfunktion (14) betrachtet. Ähnliche Ergebnisse können für die anderen Kostenfunktionen abgeleitet werden. Das Optimierungsproblem lässt sich in diesem Fall als folgendes Minimierungsproblem der Kostenfunktion beschreiben:

$$\min_{\substack{\mathbf{k}_P^{t_n}\in K_P^{t_n} \\ \mathbf{k}_S^{t_n}\in K_S^{t_n} \\ \mathbf{P}_d^{t_n}\in P_T^{t_n}}} \max_{\substack{\Delta\mathbf{P}_f^{t_n}\in P_F^{\infty,1,t_n} \\ \Delta\mathbf{P}_s^{t_n}\in P_S^{\infty,1,t_n}}} \sum_{t_n=0}^{T_n} \mathbf{c}_d^T \mathbf{P}_d^{t_n} + \mathbf{c}_P^T \mathbf{k}_P^{t_n} + \mathbf{c}_S^T \left|\mathbf{k}_S^{t_n}\right| \qquad (20a)$$

unter den Nebenbedingungen:

$$\left| W B^T L^\dagger \left( \mathbf{P}_e^{t_n} + \mathbf{P}_d^{t_n} + (\mathbb{I} - \mathbf{k}_S^{t_n}\mathbf{1}^T)\Delta\mathbf{P}_s^{t_n} + \left(\mathbb{I} - \frac{\mathbf{k}_P^{t_n}\mathbf{1}^T}{\mathbf{1}^T\mathbf{k}_P^{t_n}}\right)\Delta\mathbf{P}_f^{t_n} \right) \right| < \gamma\mathbf{1} \qquad (20b)$$

$$\mathbf{1}^T\mathbf{k}_S^{t_n} = 1 \qquad (20c)$$

$$\left|\frac{\mathbf{1}^T\Delta\mathbf{P}_f^{t_n}}{\mathbf{1}^T\mathbf{k}_P^{t_n}}\right| = \overline{\Delta f} \qquad (20d)$$

Mit der in Gleichung (20a) enthaltenen Maximierung wird die Einhaltung der obigen Toleranzbereiche TB1 und TB2 sichergestellt. Über die Nebenbedingung (20b) wird die Leistungsbegrenzung auf den Stromleitungen berücksichtigt. Durch die Nebenbedingung (20c) wird die Bedingung aus Gleichung (4) berücksichtigt. Durch die Nebenbedingung (20d) wird die Begrenzung der Abweichung der Netzfrequenz von der Nennfrequenz berücksichtigt. Dabei stellt $\overline{\Delta f}$ die maximal erlaubte Frequenzabweichung dar.

Die Größen $K_P^{t_n}$, $K_S^{t_n}$, $P_T^{t_n}$, $P_F^{\infty,1,t_n}$, $P_S^{\infty,1,t_n}$ werden im Folgenden definiert:

Die Größen $K_P^{t_n}$, $K_S^{t_n}$, $P_T^{t_n}$ sind einstellbare Parameter. Dabei werden diejenigen Knoten, für welche Primärregelleistung und Sekundärregelleistung eingestellt werden können, mit dem Indexsatz $N_K$ für $k_{P,i}^{t_n}$ und $k_{S,i}^{t_n}$ bezeichnet. Demgegenüber werden diejenigen Knoten, deren erzeugte Wirkleistung manipuliert werden kann, mit dem Indexsatz $N_P$ für $P_{d,i}^{t_n}$ bezeichnet. Das heißt, $k_{P,i}^{t_n}, k_{S,i}^{t_n}, i \in N_K^{t_n}$ und $P_{d,i}^{t_n}, i \in N_P$ können durch den Netzbetreiber manipuliert werden. Die erlaubten Sätze für $\mathbf{k}_P^{t_n}$, $\mathbf{k}_S^{t_n}$ und $\mathbf{P}_d^{t_n}$ lauten deshalb wie folgt:

$$K_P^{t_n} = \left\{ \mathbf{k}_P^{t_n} \in \mathbb{R}_{\geq 0}^N : k_{P,i}^{t_n} = k_{P,i}^{0,t_n}, \forall i \in N\backslash N_K \right\} \qquad (21)$$

$$K_S^{t_n} = \left\{ \mathbf{k}_S^{t_n} \in \mathbb{R}_{\geq 0}^N : k_{S,i}^{t_n} = k_{S,i}^{0,t_n}, \forall i \in N\backslash N_K \right\} \qquad (22)$$

$$P_T^{t_n} = \left\{ \mathbf{P}_d^{t_n} \in \mathbb{R}^N \ : \ P_{d,i}^{t_n} = P_{d,i}^{0,t_n}, \forall i \in N \backslash N_P \right\} \qquad (23)$$

Dabei sind $k_{P,i}^{0,t_n} \geq 0$, $k_{S,i}^{0,t_n}$ und $P_{d,i}^{0,t_n}$ vorgegebene, nicht einstellbare Parameter für diejenigen Knoten, welche zum Zeitpunkt $t_n$ nicht manipuliert werden können. $\mathbb{R}_{\geq 0}^N$ bezeichnet einen N-dimensionalen Vektor mit nicht-negativen reellen Zahlen. Unter Umständen sind die Sätze $N_K$ und $N_P$ auch zeitlich veränderlich, was jedoch hier nicht weiter betrachtet wird.

Die Schwankungen bzw. Unsicherheiten $\Delta \mathbf{P}_s^{t_n}$ und $\Delta \mathbf{P}_f^{t_n}$ sind unbekannt. Es ist jedoch bekannt, dass diese Größen in einer konvexen Menge liegen, welche einem Toleranzbereich im Sinne der Ansprüche entspricht. Es werden dabei zwei konvexe Mengen betrachtet. In einem ersten Fall darf jedes Element der Vektoren $\Delta \mathbf{P}_s^{t_n}$, $\Delta \mathbf{P}_f^{t_n}$ unabhängig von anderen Elementen frei in einem vorbestimmten Intervall variieren, d.h. es gilt:

$$\left| \Delta \mathbf{P}_s^{t_n} \right| \leq \overline{\Delta \mathbf{P}_s^{t_n}}, \qquad \left| \Delta \mathbf{P}_f^{t_n} \right| \leq \overline{\Delta \mathbf{P}_f^{t_n}} \qquad (24)$$

Dabei sind $\overline{\Delta \mathbf{P}_s^{t_n}}$, $\overline{\Delta \mathbf{P}_f^{t_n}} \in \mathbb{R}_{\geq 0}^N$ bekannte Grenzen und es gilt $\overline{\Delta \mathbf{P}_{s,i}^{t_n}} = 0$ oder $\overline{\Delta \mathbf{P}_{f,i}^{t_n}} = 0$, falls langsame und schnelle Variationen am Knoten i zum Zeitpunkt $t_n$ nicht erlaubt sind. Im Folgenden werden symmetrische Intervalle betrachtet. Ähnliche Ergebnisse können auch für asymmetrische Intervalle abgeleitet werden.

In einem zweiten Fall ist die konvexe Menge bzw. der Toleranzbereich über ein globales Unsicherheitslimit definiert, welches durch folgende skalare Unsicherheit gegeben ist:

$$\overline{\Delta \mathbf{P}_s^{t_n}}^{-T} \left| \Delta \mathbf{P}_s^{t_n} \right| \leq 1, \qquad \overline{\Delta \mathbf{P}_f^{t_n}}^{-T} \left| \Delta \mathbf{P}_f^{t_n} \right| \leq 1 \qquad (25)$$

Dabei bezeichnet $\overline{\Delta \mathbf{P}_s^{t_n}}^{-1} = \left[ \overline{\Delta \mathbf{P}_{s,i}^{t_n}}^{-1} \right]$ das elementweise Inverse von $\overline{\Delta \mathbf{P}_s^{t_n}}$, wohingegen $\overline{\Delta \mathbf{P}_s^{t_n}}^{-T}$ das Transponierte von $\overline{\Delta \mathbf{P}_s^{t_n}}^{-1}$ ist. Der Unterschied zwischen dem Toleranzbereich gemäß Gleichung (24) und dem Toleranzbereich gemäß Gleichung (25) besteht darin, dass der Toleranzbereich gemäß Gleichung (24) eine gewichtete Unendlichkeits-Norm-Unsicherheit darstellt, d.h. alle Elemente von $\Delta \mathbf{P}_s^{t_n}$, $\Delta \mathbf{P}_f^{t_n}$ können Extremwerte zu jedem Zeitpunkt annehmen. Demgegenüber stellt der Toleranzbereich gemäß Gleichung (25) eine gewichtete 1-Norm-Unsicherheit dar, d.h. die Unsicherheiten sind nicht unabhängig voneinander und nicht alle Elemente von $\Delta \mathbf{P}_s^{t_n}$, $\Delta \mathbf{P}_f^{t_n}$ können gleichzeitig Extremwerte annehmen. Die Anzahl von Knoten mit unsicherer Last und/oder unsicherer regenerativer Einspeiseleistung/Leistungserzeugung werden mit $N_{P_s}$ bzw. $N_{Pf}$ für langsame bzw. schnelle Unsicherheiten bezeichnet. Für die beiden genannten konvexen Mengen ergeben sich für die 1-Norm insgesamt $2N_{P_{s,f}}$ Eckpunkte und für die Unendlichkeits-Norm $2^{N_{P_{s,f}}}$ Eckpunkte. Die entsprechenden Sätze an Unsicherheiten sind wie folgt definiert:

$$P_F^{\infty,t_n} \left( \overline{\Delta \mathbf{P}_f^{t_n}} \right) = \left\{ \Delta \mathbf{P}_f^{t_n} \in \mathbb{R}^N : \left| \Delta \mathbf{P}_f^{t_n} \right| \leq \overline{\Delta \mathbf{P}_f^{t_n}} \right\} \qquad (26)$$

$$P_F^{1,t_n}\left(\overline{\Delta \mathbf{P}_f^{t_n}}\right) = \left\{\Delta \mathbf{P}_f^{t_n} \in \mathbb{R}^N : \overline{\Delta \mathbf{P}_f^{t_n}}^{-T} \left|\Delta \mathbf{P}_f^{t_n}\right| \le 1\right\} \tag{27}$$

$$P_S^{\infty,t_n}\left(\overline{\Delta \mathbf{P}_s^{t_n}}\right) = \left\{\Delta \mathbf{P}_s^{t_n} \in \mathbb{R}^N : \left|\Delta \mathbf{P}_s^{t_n}\right| \le \overline{\Delta \mathbf{P}_s^{t_n}}\right\} \tag{28}$$

$$P_S^{1,t_n}\left(\overline{\Delta \mathbf{P}_s^{t_n}}\right) = \left\{\Delta \mathbf{P}_s^{t_n} \in \mathbb{R}^N : \overline{\Delta \mathbf{P}_s^{t_n}}^{-T} \left|\Delta \mathbf{P}_s^{t_n}\right| \le 1\right\} \tag{29}$$

Aus Übersichtlichkeitsgründen werden im Folgenden die Argumente $\overline{\Delta \mathbf{P}_f^{t_n}}$, $\overline{\Delta \mathbf{P}_s^{t_n}}$ von $P_F^{\infty,1,t_n}$, $P_S^{\infty,1,t_n}$ oft weggelassen.

Das obige Problem (20) ist ein min-max-Optimierungsproblem, welches schwer zu lösen ist, da es eine nicht-lineare Kombination von $\mathbf{k}_P^{t_n}$ und $\Delta \mathbf{P}_f^{t_n}$ sowie $\mathbf{k}_S^{t_n}$ und $\Delta \mathbf{P}_s^{t_n}$ in der Nebenbedingung (20b) enthält. In Analogie zu der Druckschrift DE 10 2013 221 750 A1 wird dieses Optimierungsproblem in ein konvexes Optimierungsproblem gewandelt. Im Folgenden sind das gewandelte konvexe Optimierungsproblem sowie weitere Vereinfachungen dieses Optimierungsproblems wiedergegeben.

Gemäß dem konvexen Optimierungsproblem wird ein Stromnetz mit bekannter Topologie und bekannten Suszeptanzen $b_{ik}$ sowie Leistungsbegrenzungen $W, \gamma$ auf den Stromleitungen betrachtet. Ferner sind Leistungsschätzungen $\mathbf{P}_e^{t_n}$ und Unsicherheitsgrenzen $\overline{\Delta \mathbf{P}_s^{t_n}}$, $\overline{\Delta \mathbf{P}_f^{t_n}}$ für langsame und schnelle Variationen dieser Leistungsschätzungen bekannt. Die Primärregelleistung $\mathbf{k}_P^{t_n}$ und die Sekundärregelleistung $\mathbf{k}_S^{t_n}$ sowie die geplanten erzeugten Leistungen $\mathbf{P}_d^{t_n}$ werden unter Minimierung ihrer Kosten optimal durch die Lösung des folgendes Optimierungsproblems bestimmt:

$$\min_{\substack{\mu^{t_n} > 0 \\ \mathbf{k}^{t_n} \in \mathbb{R}_{\ge 0}^N \\ \mathbf{k}_S^{t_n} \in K_S^{t_n} \\ \mathbf{P}_d^{t_n} \in P_T^{t_n}}} \sum_{t_n=0}^{T_n} \mathbf{c}_d^T \mathbf{P}_d^{t_n} + \tilde{\mathbf{c}}_P^T \mathbf{k}^{t_n} + \mathbf{c}_S^T \left|\mathbf{k}_S^{t_n}\right| \tag{30a}$$

unter den Nebenbedingungen:

$$\left| W B^T L^\dagger \left( \mathbf{P}_e^{t_n} + \mathbf{P}_d^{t_n} + \left( \mathbb{I} - \mathbf{k}_S^{t_n} \mathbf{1}^T \right) \Delta \mathbf{P}_s^{t_n} + \left( \mathbb{I} - \mathbf{k}^{t_n} \mathbf{1}^T \right) \Delta \mathbf{P}_f^{t_n} \right) \right| \le \gamma \mathbf{1} \tag{30b}$$

$$\mathbf{1}^T \mathbf{k}_S^{t_n} = 1 \tag{30c}$$

$$\mathbf{1}^T \mathbf{k}^{t_n} = 1 \tag{30d}$$

$$\mathbf{1}^T \left( \mathbf{P}_e^{t_n} + \mathbf{P}_d^{t_n} \right) = 0 \tag{30e}$$

$$-\overline{\Delta f} \le \mu^{t_n} \mathbf{1}^T \Delta \mathbf{P}_f^{t_n} \le \overline{\Delta f} \qquad (30\text{f})$$

$$\mathbf{e}_i^T \mathbf{k}^{t_n} = \mu^{t_n} k_{P,i}^{0,t_n}, \quad \forall i \in \overline{N_K} \qquad (30\text{g})$$

$$\forall \Delta \mathbf{P}_s^{t_n} \in \overline{P_S^{\infty,1,t_n}}, \quad \Delta \mathbf{P}_f^{t_n} \in \overline{P_F^{\infty,1,t_n}}, \forall t_n \qquad (30\text{h})$$

Dabei bezeichnen $\overline{P_S^{\infty,1,t_n}}$, $\overline{P_F^{\infty,1,t_n}}$ Sätze von Eckpunkten von $P_S^{\infty,t_n}$, $P_F^{\infty,t_n}$ bzw. $P_S^{1,t_n}$, $P_F^{1,t_n}$.

Die resultierende Zuweisung von Primärregelleistung ist gegeben durch $\mathbf{k}_P^{t_n} = \frac{1}{\mu^{t_n}} \mathbf{k}^{t_n}$.

Im obigen Optimierungsproblem wird die Linearisierung des nicht-linearen Terms umfassend $\mathbf{k}_P^{t_n}$ durch die Umformulierung $\mathbf{k}_P^{t_n} = \frac{1}{\mu^{t_n}} \mathbf{k}^{t_n}$ erreicht. Dies beeinflusst auch die Kostenfunktion, in der anstatt des Kostenvektors $\mathbf{c}_P$ der Kostenvektor $\tilde{\mathbf{c}}_P$ verwendet wird. Eine zunehmende Anzahl von variablen Lasten bzw. regenerativen Energieerzeugern führt zu einer kombinatorisch zunehmenden Anzahl von Eckpunkten und somit zu einer signifikanten Zunahme der Anzahl von Nebenbedingungen. Demzufolge wird in einer weiteren Variante das obige konvexe Optimierungsproblem für die Verwendung der 1-Norm-Unsicherheit bzw. der Unendlichkeits-Norm-Unsicherheit vereinfacht.

Gemäß der Vereinfachung basierend auf den Unendlichkeits-Norm-Unsicherheiten nach Gleichung (24) können die Primärregelleistung, die Sekundärregelleistung sowie die geplante erzeugte Leistung unter Minimierung ihrer Kosten durch die Lösung des folgenden Optimierungsproblems optimal verteilt werden:

$$\min_{\substack{\mu^{t_n}>0 \\ \mathbf{k}^{t_n}\in\mathbb{R}_{\ge0}^N \\ \mathbf{k}_S^{t_n}\in K_S^{t_n} \\ \mathbf{P}_d^{t_n}\in P_T^{t_n}}} \sum_{t_n=0}^{T_n} \mathbf{c}_d^T \mathbf{P}_d^{t_n} + \tilde{\mathbf{c}}_P^T \mathbf{k}^{t_n} + \mathbf{c}_S^T \left| \mathbf{k}_S^{t_n} \right| \qquad (31\text{a})$$

unter den Nebenbedingungen:

$$\left| W B^T L^\dagger \left( \mathbf{P}_e^{t_n} + \mathbf{P}_d^{t_n} \right) \right| + \left| W B^T L^\dagger \left( \mathbb{I} - \mathbf{k}_S^{t_n} \mathbf{1}^T \right) \right| \overline{\Delta \mathbf{P}_s^{t_n}} + \left| W B^T L^\dagger \left( \mathbb{I} - \mathbf{k}^{t_n} \mathbf{1}^T \right) \right| \overline{\Delta \mathbf{P}_f^{t_n}}$$
$$\le \gamma \mathbf{1} \qquad (31\text{b})$$

$$\mathbf{1}^T \mathbf{k}_S^{t_n} = 1 \qquad (31\text{c})$$

$$\mathbf{1}^T \mathbf{k}^{t_n} = 1 \qquad (31\text{d})$$

$$\mathbf{1}^T \left( \mathbf{P}_e^{t_n} + \mathbf{P}_d^{t_n} \right) = 0 \qquad (31\text{e})$$

$$\mu^{t_n}\mathbf{1}^T\overline{\Delta\mathbf{P}_f^{t_n}} \leq \overline{\Delta f} \qquad (31f)$$

$$\mathbf{e}_i^T\mathbf{k}^{t_n} = \mu^{t_n}k_{P,i}^{0,t_n}, \quad \forall i \in \overline{N_K}, \forall t_n \qquad (31g)$$

Für 1-Norm-Unsicherheiten gemäß Gleichung (25) können die Primärregelleistung, die Sekundärregelleistung sowie die geplante erzeugte Leistung unter Minimierung ihrer Kosten durch die Lösung des folgenden Optimierungsproblems optimal verteilt werden:

$$\min_{\substack{\mu^{t_n}>0 \\ \mathbf{k}^{t_n}\in\mathbb{R}_{\geq 0}^N \\ \mathbf{k}_S^{t_n}\in K_S^{t_n} \\ \mathbf{P}_d^{t_n}\in P_T^{t_n}}} \sum_{t_n=0}^{T_n} \mathbf{c}_d^T\mathbf{P}_d^{t_n} + \tilde{\mathbf{c}}_P^T\mathbf{k}^{t_n} + \mathbf{c}_S^T\left|\mathbf{k}_S^{t_n}\right| \qquad (32a)$$

unter den Nebenbedingungen:

$$\left|WB^TL^\dagger\left(\mathbf{P}_e^{t_n} + \mathbf{P}_d^{t_n}\right)\right| + \left\|\left|WB^TL^\dagger\left(\mathbb{I} - \mathbf{k}_S^{t_n}\mathbf{1}^T\right)\right|diag\left(\overline{\Delta\mathbf{P}_s^{t_n}}\right)\right\|_{\text{row,max}}$$
$$+ \left\|\left|WB^TL^\dagger\left(\mathbb{I} - \mathbf{k}^{t_n}\mathbf{1}^T\right)\right|diag\left(\overline{\Delta\mathbf{P}_f^{t_n}}\right)\right\|_{\text{row,max}} \leq \gamma\mathbf{1} \qquad (32b)$$

$$\mathbf{1}^T\mathbf{k}_S^{t_n} = 1 \qquad (32c)$$

$$\mathbf{1}^T\mathbf{k}^{t_n} = 1 \qquad (32d)$$

$$\mathbf{1}^T\left(\mathbf{P}_e^{t_n} + \mathbf{P}_d^{t_n}\right) = 0 \qquad (32e)$$

$$\mu^{t_n}\max_i\overline{\Delta\mathbf{P}_f^{t_n}} \leq \overline{\Delta f} \qquad (32f)$$

$$\mathbf{e}_i^T\mathbf{k}^{t_n} = \mu^{t_n}k_{P,i}^{0,t_n}, \quad \forall i \in \overline{N_K}, \forall t_n \qquad (32g)$$

wobei $\|X\|_{\text{row,max}}$ die zeilenweise Maximum-Norm einer Matrix X ist, d.h. es gilt:

$$\left\|\begin{pmatrix} x_1^T \\ \vdots \\ x_n^T \end{pmatrix}\right\|_{\text{row,max}} = \begin{pmatrix} \|x_1^T\|_\infty \\ \vdots \\ \|x_n^T\|_\infty \end{pmatrix} \qquad (33)$$

Die daraus resultierende Zuweisung der Primärregelleistung lautet wie folgt: $\mathbf{k}_P^{t_n} = \frac{1}{\mu^{t_n}}\mathbf{k}^{t_n}$. Beide der soeben genannten Optimierungsprobleme (31) und (32) sind konvex. Dabei hat das Unendlichkeits-Norm-Optimierungsproblem nach Gleichung (31) strengere Nebenbedingungen als das 1-Norm-Optimierungsproblem nach Gleichung (32). Üblicherweise werden zusätzliche Nebenbedingungen in den Optimierungsproblemen (30), (31) und (32) berücksichtigt, z.B. werden Grenzen der durch die Knoten erzeugten Leistungen bzw. der vorgehaltenen Primär- und Sekundärregelleistungen festgelegt, d.h. es gilt:

$$\left| P_{I,i}^{t_n} \right| = k_{P,i}^{t_n} \frac{\left| \mathbf{1}^T \Delta \mathbf{P}_f^{t_n} \right|}{\mathbf{1}^T \mathbf{k}_P^{t_n}} \leq P_{I,i,max}^{t_n} \qquad (34)$$

$$\left| P_{II,i}^{t_n} \right| \leq P_{II,i,max}^{t_n} \qquad (35)$$

$$\left| P_{e,i}^{t_n} \right| + \left| P_{d,i}^{t_n} \right| + P_{I,i,max}^{t_n} + P_{II,i,max}^{t_n} \leq P_{i,max}^{t_n} \qquad (36)$$

Dabei bezeichnet $P_{I,i,max}^{t_n}$ die Grenze für die Primärregelleistung, $P_{II,i,max}^{t_n}$ die Grenzen für die Sekundärregelleistung und $P_{i,max}^{t_n}$ die Grenze für die erzeugten Leistung des Knotens i zum Zeitpunkt $t_n$.

Darüber hinaus werden oft zusätzliche Nebenbedingungen berücksichtigt, die die verschiedenen Zeitschritte miteinander verknüpfen. Beispielsweise kann berücksichtigt werden, dass die nicht-regenerativen Kraftwerke nur begrenzte Leistungsänderungen durchfahren können. Dies kann durch die folgende Nebenbedingung eingeführt werden

$$\left| P_{d,i}^{t_n} - P_{d,i}^{t_{n+1}} \right| \leq \Delta P_{d,i}^{max}$$

Hierbei beschreibt $\Delta P_{d,i}^{max}$ die maximal zulässige Änderung der Leistungserzeugung des nicht-regenerativen Energieerzeugers am Knoten i im Zeitinterval $t_{n+1} - t_n$.

Die obigen konvexen Optimierungsprobleme können auf an sich bekannte Weise mit bekannten Algorithmen, wie z.B. dem Gradienten-Abstiegs-Verfahren bzw. dem Innere-Punkte-Verfahren, gelöst werden. Die Optimierungsalgorithmen können je nach Ausgestaltung auf unterschiedliche Weise ausgeführt werden. In einer Variante wird die Optimierung einmal am Tag ausgeführt, und die optimierte Verteilung der Leistungen ist anschließend für die nächsten 24 Stunden gültig. Dies impliziert, dass langsame Unsicherheiten $\Delta \mathbf{P}_s^{t_n}$ üblicherweise sehr groß werden. Dies bedeutet wiederum, dass die Optimierung relativ konservativ sein muss. In einer weiteren Variante wird die Optimierung alle 15 Minuten für die nächsten 24 Stunden wiederholt ausgeführt, d.h. mit einem fortschreitenden Zeithorizont, der aktualisierte Schätzungen für die Last und die regenerative Einspeiseleistung verwendet. Durch diese aktualisierten Schätzungen werden langsame Schwankungen $\Delta \mathbf{P}_s^{t_n}$ für die ersten Stunden wesentlich geringer. Die robuste Optimierung muss somit weniger konservativ sein.

Die im Vorangegangenen beschriebenen Ausführungsformen der Erfindung weisen eine Reihe von Vorteilen auf. Insbesondere wird erstmals eine gemeinsame Optimierung für die geplante Einspeiseleistung/Leistungserzeugung von Knoten in einem Stromnetz und die Verteilung von Primärregelleistung und Sekundärregelleistung auf die Knoten erreicht. Die Optimierung gewährleistet dabei einen stabilen Betrieb des Stromnetzes, da die Nebenbedingungen einer maximalen Abweichung der Netzfrequenz von der Nennfrequenz sowie einer Begrenzung der Leistung auf den Stromleitungen berücksichtigt werden. Im Rahmen der Optimierung werden auch Unsicherheiten in der Leistungserzeugung berücksichtigt, welche sich aus variablen Lasten sowie regenerativen Energieerzeugern ergeben.

Mit der erfindungsgemäßen Optimierung kann ein Stromnetz näher an seinen physikalischen Grenzen betrieben werden. Hierdurch können Investitionskosten für die Hardware des Stromnetzes vermindert werden bzw. mehr regenerative Energieerzeuger in existierende Stromnetze integriert werden. Das Verfahren der Erfindung eignet sich insbesondere auch für Stromnetze, welche Energie bzw. Primär- und Sekundärregelleistungen auf Energiemärkten handeln. Nichtsdestotrotz kann das Verfahren auch für Stromnetze ohne Energiemärkte eingesetzt werden, wie z.B. große Inselnetze.

**Patentansprüche**

1. Verfahren zur rechnergestützten Steuerung der Leistung in einem elektrischen Stromnetz, wobei das Stromnetz eine vorgegebene Nennfrequenz aufweist und eine Mehrzahl von über Stromleitungen (PL) miteinander verbundenen Knoten (N1, N2, ..., N7) umfasst, welche jeweils einen ersten Energieerzeuger (G1, G2, G3) aus einer oder mehreren nicht-regenerativen Energieerzeugungsanlagen und/oder einen zweiten Energieerzeuger (W1, W2, W3) aus einer oder mehreren regenerativen Energieerzeugungsanlagen und/oder einen Energieverbraucher (L1, L2, ..., L6) aus einer oder mehreren Energieverbrauchseinheiten umfassen, wobei das Stromnetz sowohl einen oder mehrere erste und zweite Energieerzeuger (G1, G2, ..., W3) als auch einen oder mehrere Energieverbraucher (L1, L2, ..., L6) enthält, wobei für einen jeweiligen Knoten (N1, N2, ..., N7) eine Leistungsschätzung ($P_{e,i}$) vorgegeben ist, welche sich aus einer Schätzung der zukünftigen Last des Energieverbrauchers (L1, L2, ..., L6) und einer Schätzung der zukünftig erzeugten regenerativen Leistung des zweiten Energieerzeugers (W1, W2, W3) im jeweiligen Knoten (N1, N2, ..., N7) zusammensetzt, und wobei Schwankungen erster Art ($\Delta P_{f,i}$) der Leistungsschätzungen ($P_{e,i}$) für die jeweiligen Knoten (N1, N2, ..., N7) in einem ersten vorgegebenen Toleranzbereich (TB1) zugelassen sind und Schwankungen zweiter Art ($\Delta P_{s,i}$) der Leistungsschätzungen ($P_{e,i}$) für die jeweiligen Knoten (N1, N2, ..., N7) in einem zweiten vorgegebenen Toleranzbereich (TB2) zugelassen sind, wobei die Schwankungen ($\Delta P_{f,i}$) erster Art durch Primärregelleistung ($P_{I,i}$) im Stromnetz zu kompensieren sind und die Schwankungen zweiter Art ($\Delta P_{s,i}$) durch Sekundärregelleistung ($P_{II,i}$) im Stromnetz zu kompensieren sind, wobei:

   a) ein stationärer Zustand des Stromnetzes modelliert wird, in dem sich eine stationäre Netzfrequenz für alle Spannungen der Knoten (N1, N2, ..., N7) einstellt;
   b) ein Optimierungsproblem gelöst wird und hierdurch mittels des modellierten stationären Zustands in Abhängigkeit von den Leistungsschätzungen ($P_{e,i}$) sowie dem ersten und zweiten Toleranzbereich (TB1, TB2) Primärregelleistungen ($P_{I,i}$) und Sekundärregelleistungen ($P_{II,i}$) den jeweiligen Knoten (N1, N2, ..., N7) derart zugewiesen werden, dass die Abweichung der stationären Netzfrequenz von der Nennfrequenz und die Leistung auf den Stromleitungen (PL) begrenzt sind.

2. Verfahren nach Anspruch 1, **dadurch gekennzeichnet, dass** in Schritt b) neben der Zuweisung der Primärregelleistungen ($P_{I,i}$) und der Sekundärregelleistungen ($P_{II,i}$) zu den jeweiligen Knoten (N1, N2, ..., N7) geplante erzeugte Leistungen ($P_{d,i}$) der ersten Energieerzeuger (G1, G2, G3) der Knoten (N1, N2, ..., N7) bestimmt und entsprechend eingestellt werden, so dass die Abweichung der stationären Netzfrequenz von der Nennfrequenz und die Leistung auf den Stromleitungen (PL) begrenzt sind.

3. Verfahren nach Anspruch 1 und 2, **dadurch gekennzeichnet, dass** das Optimierungsproblem als eine Optimierung einer Kostenfunktion definiert ist, welche eine Summe von mehreren Kostentermen enthält, wobei die Kostenterme einen ersten Kostenterm für die den jeweiligen Knoten (N1, N2, ..., N7) zugewiesenen Primärregelleistungen ($P_{I,i}$) oder Abweichungen dieser Primärregelleistungen ($P_{I,i}$) von vorgegebenen Sollwerten und/oder einen zweiten Kostenterm für die den jeweiligen Knoten (N1, N2, ..., N7) zugewiesenen Sekundärregelleistungen ($P_{II,i}$) oder Abweichungen dieser Sekundärregelleistungen ($P_{II,i}$) von vorgegebenen Sollwerten enthalten.

4. Verfahren nach Anspruch 2 und 3, **dadurch gekennzeichnet, dass** die Kostenfunktion ferner einen dritten Kostenterm für die geplanten erzeugten Leistungen ($P_{d,i}$) der ersten Energieerzeuger (G1, G2, G3) der Knoten (N1, N2, ..., N7) oder für Abweichungen dieser Leistungen von Sollwerten umfasst.

5. Verfahren nach einem der vorhergehenden Ansprüche, **dadurch gekennzeichnet, dass** der stationäre Zustand des Stromnetzes basierend auf Lastflussgleichungen für die in den jeweiligen Knoten (N1, N2, ..., N7) auftretenden Leistungen modelliert wird.

6. Verfahren nach einem der vorhergehenden Ansprüche, **dadurch gekennzeichnet, dass** der erste Toleranzbereich (TB1) und/oder der zweite Toleranzbereich (TB2) jeweils derart definiert sind, dass die Schwankung erster und/oder zweiter Art der Leistungsschätzung ($P_{e,i}$) für jeden Knoten (N1, N2, ..., N7) in einem vorbestimmten Toleranzintervall liegt.

7. Verfahren nach einem der vorhergehenden Ansprüche, **dadurch gekennzeichnet, dass** der erste Toleranzbereich und/oder der zweite Toleranzbereich jeweils derart definiert sind, dass eine Summe und insbesondere eine gewichtete Summe der Schwankungen erster und/oder zweiter Art der Leistungsschätzungen ($P_{e,i}$) für alle Knoten (N1, N2, ..., N7) kleiner oder gleich einem vorbestimmten Wert ist.

8. Verfahren nach einem der vorhergehenden Ansprüche, **dadurch gekennzeichnet, dass** bei der Lösung des Optimierungsproblems die Nebenbedingung berücksichtigt wird, dass die geplanten erzeugten Leistungen ($P_{d,i}$) der ersten Energieerzeuger (G1, G2, G3) und/oder die den jeweiligen Knoten (N1, N2, ..., N7) zugewiesenen Primärregelleistungen ($P_{I,i}$) und/oder Sekundärregelleistungen ($P_{II,i}$) begrenzt sind.

9. Verfahren nach einem der vorhergehenden Ansprüche, **dadurch gekennzeichnet, dass** das Optimierungsproblem im Rahmen dessen Lösung in ein konvexes Optimierungsproblem gewandelt wird.

10. Vorrichtung zur rechnergestützten Steuerung der Leistung in einem elektrischen Stromnetz, wobei das Stromnetz eine vorgegebene Nennfrequenz aufweist und eine Mehrzahl von über Stromleitungen (PL) miteinander verbundenen Knoten (N1, N2, ..., N7) umfasst, welche jeweils einen ersten Energieerzeuger (G1, G2, G3) aus einer oder mehreren nicht-regenerativen Energieerzeugungsanlagen und/oder einen zweiten Energieerzeuger (W1, W2, W3) aus einer oder mehreren regenerativen Energieerzeugungsanlagen und/oder einen Energieverbraucher (L1, L2, ..., L6) aus einer oder mehreren Energieverbrauchseinheiten umfassen, wobei das Stromnetz sowohl einen oder mehrere erste und zweite Energieerzeuger (G1, G2, ..., W3) als auch einen oder mehrere Energieverbraucher (L1, L2, ..., L6) enthält, wobei für einen jeweiligen Knoten (N1, N2, ..., N7) eine Leistungsschätzung ($P_{e,i}$) vorgegeben ist, welche sich aus einer Schätzung der zukünftigen Last des Energieverbrauchers (L1, L2, ..., L6) und einer Schätzung der zukünftigen Leistung des zweiten regenerativen Energieerzeugers (W1, W2, W3) im jeweiligen Knoten (N1, N2, ..., N7) zusammensetzt, und wobei Schwankungen erster Art ($\Delta P_{f,i}$) der Leistungsschätzungen ($P_{e,i}$) für die jeweiligen Knoten (N1, N2, ..., N7) in einem ersten vorgegebenen Toleranzbereich (TB1) zugelassen sind und Schwankungen zweiter Art ($\Delta P_{s,i}$) der Leistungsschätzungen ($P_{e,i}$) für die jeweiligen Knoten (N1, N2, ..., N7) in einem zweiten vorgegebenen Toleranzbereich (TB2) zugelassen sind, wobei die Schwankungen erster Art ($\Delta P_{f,i}$) durch Primärregelleistung ($P_{I,i}$) im Stromnetz zu kompensieren sind und die Schwankungen zweiter Art ($\Delta P_{s,i}$) durch Sekundärregelleistung ($P_{II,i}$) im Stromnetz zu kompensieren sind, wobei die Vorrichtung zur Durchführung eines Verfahrens eingerichtet ist, bei dem:

  a) ein stationärer Zustand des Stromnetzes modelliert wird, in dem sich eine stationäre Netzfrequenz für alle Spannungen der Knoten (N1, N2, ..., N7) einstellt;
  b) ein Optimierungsproblem gelöst wird und hierdurch mittels des modellierten stationären Zustands in Abhängigkeit von den Leistungsschätzungen ($P_{e,i}$) sowie dem ersten und zweiten Toleranzbereich (TB1, TB2) Primärregelleistungen ($P_{I,i}$) und Sekundärregelleistungen ($P_{II,i}$) den jeweiligen Knoten (N1, N2, ..., N7) derart zugewiesen werden, dass die Abweichung der stationären Netzfrequenz von der Nennfrequenz und die Leistung auf den Stromleitungen (PL) begrenzt sind.

11. Vorrichtung nach Anspruch 10, **dadurch gekennzeichnet, dass** die Vorrichtung zu Durchführung eines Verfahrens nach einem der Ansprüche 2 bis 9 eingerichtet ist.

12. Elektrisches Stromnetz, welches eine vorgegebene Nennfrequenz aufweist und eine Mehrzahl von über Stromleitungen (PL) miteinander verbundenen Knoten (N1, N2, ..., N7) umfasst, welche jeweils einen ersten Energieerzeuger (G1, G2, G3) aus einer oder mehreren nicht-regenerativen Energieerzeugungsanlagen und/oder einen zweiten Energieerzeuger (W1, W2, W3) aus einer oder mehreren regenerativen Energieerzeugungsanlagen und/oder einen Energieverbraucher (L1, L2, ..., L6) aus einer oder mehreren Energieverbrauchseinheiten umfassen, wobei das Stromnetz sowohl einen oder mehrere erste und zweite Energieerzeuger (G1, G2, ..., W3) als auch eine oder mehrere Energieverbraucher (L1, L2, ..., L6) enthält, wobei für einen jeweiligen Knoten (N1, N2, ..., N7) eine Leistungsschätzung ($P_{e,i}$) vorgegeben ist, welche sich aus einer Schätzung der zukünftigen Last des Energieverbrauchers (L1, L2, ..., L6) und einer Schätzung der zukünftigen Leistung des zweiten, regenerativen Energieerzeugers (W1, W2, W3) im jeweiligen Knoten (N1, N2, ..., N7) zusammensetzt, und wobei Schwankungen erster Art ($\Delta P_{f,i}$) der Leistungsschätzungen ($P_{e,i}$) für die jeweiligen Knoten (N1, N2, ..., N7) in einem ersten vorgegebenen Toleranzbereich (TB1) zugelassen sind und Schwankungen zweiter Art ($\Delta P_{s,i}$) der Leistungsschätzungen ($P_{e,i}$) für die jeweiligen Knoten (N1, N2, ..., N7) in einem zweiten vorgegebenen Toleranzbereich (TB2) zugelassen sind, wobei die Schwankungen erster Art ($\Delta P_{f,i}$) durch Primärregelleistung ($P_{I,i}$) im Stromnetz zu kompensieren sind und die Schwankungen zweiter Art ($\Delta P_{s,i}$) durch Sekundärregelleistung ($P_{II,i}$) im Stromnetz zu kompensieren sind, wobei das Stromnetz eine Vorrichtung zur rechnergestützten Steuerung der Leistung nach Anspruch 10 oder 11 umfasst.

## Claims

1. Method for the computer-aided control of the power in an electrical grid, the grid having a predefined nominal frequency and comprising a plurality of nodes (N1, N2, ..., N7) which are connected to one another via power lines (PL) and each comprise a first energy producer (G1, G2, G3) from one or more non-regenerative energy production installations and/or a second energy producer (W1, W2, W3) from one or more regenerative energy production installations and/or an energy consumer (L1, L2, ..., L6) from one or more energy consumption units, the grid containing both one or more first and second energy producers (G1, G2, ..., W3) and one or more energy consumers (L1, L2, ..., L6), a power estimate ($P_{e,i}$) being predefined for a respective node (N1, N2, ..., N7), which power estimate is composed of an estimate of the future load of the energy consumer (L1, L2, ..., L6) and an estimate of the regenerative power produced in the future by the second energy producer (W1, W2, W3) in the respective node (N1, N2, ..., N7), and fluctuations of a first type ($\Delta P_{f,i}$) in the power estimates ($P_{e,i}$) being allowed for the respective nodes (N1, N2, ..., N7) in a first predefined tolerance range (TB1) and fluctuations of a second type ($\Delta P_{s,i}$) in the power estimates ($P_{e,i}$) being allowed for the respective nodes (N1, N2, ..., N7) in a second predefined tolerance range (TB2), in which case the fluctuations ($\Delta P_{f,i}$) of the first type should be compensated for by primary control power ($P_{I,i}$) in the grid and the fluctuations of the second type ($\Delta P_{s,i}$) should be compensated for by secondary control power ($P_{II,i}$) in the grid, wherein:

a) a steady state of the grid, in which a steady-state grid frequency is established for all voltages of the nodes (N1, N2, ..., N7), is modeled;

b) an optimization problem is solved and primary control powers ($P_{I,i}$) and secondary control powers ($P_{II,i}$) are hereby allocated to the respective nodes (N1, N2, ..., N7) by means of the modeled steady state on the basis of the power estimates ($P_{e,i}$) and the first and second tolerance ranges (TB1, TB2) in such a manner that the deviation of the steady-state grid frequency from the nominal frequency and the power on the power lines (PL) are limited.

2. Method according to Claim 1, **characterized in that**, in step b), in addition to allocating the primary control powers ($P_{I,i}$) and the secondary control powers ($P_{II,i}$) to the respective nodes (N1, N2, ..., N7), planned powers ($P_{d,i}$) produced by the first energy producers (G1, G2, G3) of the nodes (N1, N2, ..., N7) are determined and accordingly set, with the result that the deviation of the steady-state grid frequency from the nominal frequency and the power on the power lines (PL) are limited.

3. Method according to Claims 1 and 2, **characterized in that** the optimization problem is defined as an optimization of a cost function which contains a sum of a plurality of cost terms, the cost terms containing a first cost term for the primary control powers ($P_{I,i}$) allocated to the respective nodes (N1, N2, ..., N7) or deviations of these primary control powers ($P_{I,i}$) from predefined desired values and/or a second cost term for the secondary control powers ($P_{II,i}$) allocated to the respective nodes (N1, N2, ..., N7) or deviations of these secondary control powers ($P_{II,i}$) from predefined desired values.

4. Method according to Claims 2 and 3, **characterized in that** the cost function also comprises a third cost term for the planned powers ($P_{d,i}$) produced by the first energy producers (G1, G2, G3) of the nodes (N1, N2, ..., N7) or for deviations of these powers from desired values.

5. Method according to one of the preceding claims, **characterized in that** the steady state of the grid is modeled on the basis of load flow equations for the powers occurring in the respective nodes (N1, N2, ..., N7).

6. Method according to one of the preceding claims, **characterized in that** the first tolerance range (TB1) and/or the second tolerance range (TB2) is/are each defined in such a manner that the fluctuation of the first and/or second type in the power estimate ($P_{e,i}$) is in a predetermined tolerance interval for each node (N1, N2, ..., N7).

7. Method according to one of the preceding claims, **characterized in that** the first tolerance range and/or the second tolerance range is/are each defined in such a manner that a sum, and in particular a weighted sum, of the fluctuations of the first and/or second type in the power estimates ($P_{e,i}$) is less than or equal to a predetermined value for all modes (N1, N2, ..., N7).

8. Method according to one of the preceding claims, **characterized in that**, when solving the optimization problem, the secondary condition, whereby the planned powers ($P_{d,i}$) produced by the first energy producers (G1, G2, G3) and/or the primary control powers ($P_{I,i}$) and/or secondary control powers ($P_{II,i}$) allocated to the respective nodes (N1, N2, ..., N7) are limited, is taken into account.

9. Method according to one of the preceding claims, **characterized in that** the optimization problem is converted into a convex optimization problem as part of its solution.

10. Apparatus for the computer-aided control of the power in an electrical grid, the grid having a predefined nominal frequency and comprising a plurality of nodes (N1, N2, ..., N7) which are connected to one another via power lines (PL) and each comprise a first energy producer (G1, G2, G3) from one or more non-regenerative energy production installations and/or a second energy producer (W1, W2, W3) from one or more regenerative energy production installations and/or an energy consumer (L1, L2, ..., L6) from one or more energy consumption units, the grid containing both one or more first and second energy producers (G1, G2, ..., W3) and one or more energy consumers (L1, L2, ..., L6), a power estimate ($P_{e,i}$) being predefined for a respective node (N1, N2, ..., N7), which power estimate is composed of an estimate of the future load of the energy consumer (L1, L2, ..., L6) and an estimate of the future power of the second regenerative energy producer (W1, W2, W3) in the respective node (N1, N2, ..., N7), and fluctuations of a first type ($\Delta P_{f,i}$) in the power estimates ($P_{e,i}$) being allowed for the respective nodes (N1, N2, ..., N7) in a first predefined tolerance range (TB1) and fluctuations of a second type ($\Delta P_{s,i}$) in the power estimates ($P_{e,i}$) being allowed for the respective nodes (N1, N2, ..., N7) in a second predefined tolerance range (TB2), in which case the fluctuations of the first type ($\Delta P_{f,i}$) should be compensated for by primary control power ($P_{I,i}$) in the grid and the fluctuations of the second type ($\Delta P_{s,i}$) should be compensated for by secondary control power ($P_{II,i}$) in the grid, wherein the apparatus is set up to carry out a method in which:

a) a steady state of the grid, in which a steady-state grid frequency is established for all voltages of the nodes (N1, N2, ..., N7), is modeled;
b) an optimization problem is solved and primary control powers ($P_{I,i}$) and secondary control powers ($P_{II,i}$) are hereby allocated to the respective nodes (N1, N2, ..., N7) by means of the modeled steady state on the basis of the power estimates ($P_{e,i}$) and the first and second tolerance ranges (TB1, TB2) in such a manner that the deviation of the steady-state grid frequency from the nominal frequency and the power on the power lines (PL) are limited.

11. Apparatus according to Claim 10, **characterized in that** the apparatus is set up to carry out a method according to one of Claims 2 to 9.

12. Electrical grid which has a predefined nominal frequency and comprises a plurality of nodes (N1, N2, ..., N7) which are connected to one another via power lines (PL) and each comprise a first energy producer (G1, G2, G3) from one or more non-regenerative energy production installations and/or a second energy producer (W1, W2, W3) from one or more regenerative energy production installations and/or an energy consumer (L1, L2, ..., L6) from one or more energy consumption units, the grid containing both one or more first and second energy producers (G1, G2, ..., W3) and one or more energy consumers (L1, L2, ..., L6), a power estimate ($P_{e,i}$) being predefined for a respective node (N1, N2, ..., N7), which power estimate is composed of an estimate of the future load of the energy consumer (L1, L2, ..., L6) and an estimate of the future power of the second regenerative energy producer (W1, W2, W3) in the respective node (N1, N2, ..., N7), and fluctuations of a first type ($\Delta P_{f,i}$) in the power estimates ($P_{e,i}$) being allowed for the respective nodes (N1, N2, ..., N7) in a first predefined tolerance range (TB1) and fluctuations of a second type ($\Delta P_{s,i}$) in the power estimates ($P_{e,i}$) being allowed for the respective nodes (N1, N2, ..., N7) in a second predefined tolerance range (TB2), in which case the fluctuations of the first type ($\Delta P_{f,i}$) should be compensated for by primary control power ($P_{I,i}$) in the grid and the fluctuations of the second type ($\Delta P_{s,i}$) should be compensated for by secondary control power ($P_{II,i}$) in the grid, wherein: the grid comprises an apparatus for the computer-aided control of the power according to Claim 10 or 11.

## Revendications

1. Procédé de commande, assistée par ordinateur, de la puissance dans un réseau de courant électrique, le réseau de courant ayant une fréquence nominale prédéfinie et comportant une pluralité de noeuds (N1, N2,..., N7) qui sont reliés entre eux par des lignes de courant (PL) et qui comprennent chacun un premier générateur d'énergie (G1, G2, G3) constitué d'une ou de plusieurs installations de production d'énergie non régénérative et/ou un second générateur d'énergie (W1, W2, W3) constitué d'une ou de plusieurs installations de production d'énergie régénérative et/ou un consommateur d'énergie (L1, L2,..., L6) constitué d'une ou de plusieurs unités consommatrices d'énergie, le réseau de courant contenant non seulement un ou plusieurs premier(s) et second(s) générateurs d'énergie (G1, G2,..., W3), mais également un ou plusieurs consommateurs d'énergie (L1, L2,..., L6), dans lequel, pour chaque noeud (N1, N2,..., N7), une estimation de puissance ($P_{e,i}$) est prédéfinie, laquelle est composée d'une estimation de la future charge du consommateur d'énergie (L1, L2,..., L6) et d'une estimation de la future production de puissance régénérative du second générateur d'énergie (W1, W2, W3) dans le noeud respectif (N1, N2,..., N7), et dans lequel des fluctuations d'un premier type ($\Delta P_{f,i}$) des estimations de puissance ($P_{e,i}$) pour les noeuds respectifs (N1, N2,..., N7) sont autorisées dans une première plage de tolérance prédéfinie (TB1) et des fluctuations d'un second type ($\Delta P_{s,i}$) des estimations de puissance ($P_{e,i}$) pour les noeuds respectifs (N1, N2,..., N7) sont autorisées dans une seconde plage de tolérance prédéfinie (TB2), les fluctuations de premier type ($\Delta P_{f,i}$) devant être compensées par une puissance de régulation primaire ($P_{I,i}$) dans le réseau de courant et les fluctuations de second type ($\Delta P_{s,i}$) devant être compensées par une puissance de régulation secondaire ($P_{II,i}$) dans le réseau de courant, dans lequel :

    a) un état stationnaire du réseau de courant, dans lequel une fréquence stationnaire de réseau s'établit pour toutes les tensions des noeuds (N1, N2,..., N7), est modélisé ;

    b) un problème d'optimisation est résolu, grâce à quoi, au moyen de l'état stationnaire modélisé, des puissances de régulation primaires ($P_{I,i}$) et des puissances de régulation secondaires ($P_{II,i}$) sont attribuées aux noeuds respectifs (N1, N2, ..., N7) en fonction des estimations de puissance ($P_{e,i}$) ainsi que de la première et de la seconde plage de tolérance (TB1, TB2), de manière à limiter l'écart de la fréquence stationnaire de réseau par rapport à la fréquence nominale ainsi que la puissance sur les lignes de courant (PL).

**2.** Procédé selon la revendication 1, **caractérisé en ce que**, dans l'étape b), outre l'attribution des puissances de régulation primaires ($P_{I,i}$) et des puissances de régulation secondaires ($P_{II,i}$) aux noeuds respectifs (N1, N2,..., N7), des puissances produites planifiées ($P_{d,i}$) des premiers générateurs d'énergie (G1, G2, G3) des noeuds (N1, N2,..., N7) sont déterminées et réglées en conséquence, de manière à limiter l'écart de la fréquence stationnaire de réseau par rapport à la fréquence nominale ainsi que la puissance sur les lignes de courant (PL).

**3.** Procédé selon les revendications 1 et 2, **caractérisé en ce que** le problème d'optimisation est défini comme une optimisation d'une fonction de coût qui contient une somme de plusieurs éléments de coût, les éléments de coût comprenant un premier élément de coût pour les puissances de régulation primaires ($P_{I,i}$) attribuées aux noeuds respectifs (N1, N2,..., N7) ou des écarts de ces puissances de régulation primaires ($P_{I,i}$) par rapport à des valeurs prescrites prédéfinies et/ou un deuxième élément de coût pour les puissances de régulation secondaires ($P_{II,i}$) attribuées aux noeuds respectifs (N1, N2, ..., N7) ou des écarts de ces puissances de régulation secondaires ($P_{II,i}$) par rapport à des valeurs prescrites prédéfinies.

**4.** Procédé selon les revendications 2 et 3, **caractérisé en ce que** la fonction de coût comprend en outre un troisième élément de coût pour les puissances produites planifiées ($P_{d,i}$) des premiers générateurs d'énergie (G1, G2, G3) des noeuds (N1, N2,..., N7) ou pour les écarts de ces puissances par rapport à des valeurs prescrites.

**5.** Procédé selon l'une des revendications précédentes, **caractérisé en ce que** l'état stationnaire du réseau de courant est modélisé en se basant sur des équations de flux de puissance pour les puissances qui sont produites dans les noeuds respectifs (N1, N2,..., N7).

**6.** Procédé selon l'une des revendications précédentes, **caractérisé en ce que** la première plage de tolérance (TB1) et/ou la seconde plage de tolérance (TB2) sont définies chacune de manière que la fluctuation de premier type et/ou de second type de l'estimation de puissance ($P_{e,i}$) pour chaque noeud (N1, N2,..., N7) se situe dans un intervalle de tolérance prédéfini.

**7.** Procédé selon l'une des revendications précédentes, **caractérisé en ce que** la première plage de tolérance et/ou la seconde plage de tolérance sont définies chacune de manière qu'une somme et, notamment, une somme pondérée des fluctuations de premier et/ou de second type des estimations de puissance ($P_{e,i}$) pour tous les noeuds (N1, N2,..., N7) soit inférieure ou égale à une valeur prédéfinie.

**8.** Procédé selon l'une des revendications précédentes, **caractérisé en ce que**, lors de la résolution du problème d'optimisation, il est tenu compte de la contrainte selon laquelle les puissances produites planifiées ($P_{d,i}$) des premiers générateurs d'énergie (G1, G2, G3) et/ou les puissances de régulation primaires ($P_{I,i}$) et/ou puissances de régulation secondaires ($P_{II,i}$) attribuées aux noeuds respectifs (N1, N2,..., N7) sont limitées.

**9.** Procédé selon l'une des revendications précédentes, **caractérisé en ce que** le problème d'optimisation est transformé, dans le cadre de sa résolution, en un problème d'optimisation convexe.

**10.** Dispositif pour la commande, assistée par ordinateur, de la puissance dans un réseau de courant électrique, le réseau de courant ayant une fréquence nominale prédéfinie et comportant une pluralité de noeuds (N1, N2,..., N7) qui sont reliés entre eux par des lignes de courant (PL) et qui comprennent chacun un premier générateur d'énergie (G1, G2, G3) constitué d'une ou de plusieurs installations de production d'énergie non régénérative et/ou un second générateur d'énergie (W1, W2, W3) constitué d'une ou de plusieurs installations de production d'énergie régénérative et/ou un consommateur d'énergie (L1, L2,..., L6) constitué d'une ou de plusieurs unités consommatrices d'énergie, le réseau de courant contenant non seulement un ou plusieurs premier(s) et second(s) générateurs d'énergie (G1, G2,..., W3), mais également un ou plusieurs consommateurs d'énergie (L1, L2,..., L6), dans lequel, pour chaque noeud (N1, N2,..., N7), une estimation de puissance ($P_{e,i}$) est prédéfinie, laquelle est composée d'une estimation de la future charge du consommateur d'énergie (L1, L2,..., L6) et d'une estimation de la future puissance du second générateur d'énergie, régénérative, (W1, W2, W3) dans le noeud respectif (N1, N2,..., N7), et dans lequel des fluctuations d'un premier type ($\Delta P_{f,i}$) des estimations de puissance ($P_{e,i}$) pour les noeuds respectifs (N1, N2,..., N7) sont autorisées dans une première plage de tolérance prédéfinie (TB1) et des fluctuations d'un second type ($\Delta P_{s,i}$) des estimations de puissance ($P_{e,i}$) pour les noeuds respectifs (N1, N2,..., N7) sont autorisées dans une seconde plage de tolérance prédéfinie (TB2), les fluctuations de premier type ($\Delta P_{f,i}$) devant être compensées par une puissance de régulation primaire ($P_{I,i}$) dans le réseau de courant et les fluctuations de second type ($\Delta P_{s,i}$) devant être compensées par une puissance de régulation secondaire ($P_{II,i}$) dans le réseau de courant, le dispositif étant conçu pour l'exécution d'un procédé dans lequel :

> a) un état stationnaire du réseau de courant, dans lequel une fréquence stationnaire de réseau s'établit pour toutes les tensions des noeuds (N1, N2,..., N7), est modélisé ;
> b) un problème d'optimisation est résolu, grâce à quoi, au moyen de l'état stationnaire modélisé, des puissances de régulation primaires ($P_{I,i}$) et des puissances de régulation secondaires ($P_{II,i}$) sont attribuées aux noeuds respectifs (N1, N2,..., N7) en fonction des estimations de puissance ($P_{e,i}$) ainsi que de la première et de la seconde plage de tolérance (TB1, TB2), de manière à limiter l'écart de la fréquence stationnaire de réseau par rapport à la fréquence nominale ainsi que la puissance sur les lignes de courant (PL).

**11.** Dispositif selon la revendication 10, **caractérisé en ce que** le dispositif est conçu pour l'exécution d'un procédé selon l'une des revendications 2 à 9.

**12.** Réseau de courant électrique ayant une fréquence nominale prédéfinie et comportant une pluralité de noeuds (N1, N2,..., N7) qui sont reliés entre eux par des lignes de courant (PL) et qui comprennent chacun un premier générateur d'énergie (G1, G2, G3) constitué d'une ou de plusieurs installations de production d'énergie non régénérative et/ou un second générateur d'énergie (W1, W2, W3) constitué d'une ou de plusieurs installations de production d'énergie régénérative et/ou un consommateur d'énergie (L1, L2,..., L6) constitué d'une ou de plusieurs unités consommatrices d'énergie, le réseau de courant contenant non seulement un ou plusieurs premier(s) et second(s) générateurs d'énergie (G1, G2,..., W3), mais également un ou plusieurs consommateurs d'énergie (L1, L2,..., L6), dans lequel, pour chaque noeud (N1, N2,..., N7), une estimation de puissance ($P_{e,i}$) est prédéfinie, laquelle est composée d'une estimation de la future charge du consommateur d'énergie (L1, L2, ..., L6) et d'une estimation de la future puissance du second générateur d'énergie, régénérative, (W1, W2, W3) dans le noeud respectif (N1, N2,..., N7), et dans lequel des fluctuations d'un premier type ($\Delta P_{f,i}$) des estimations de puissance ($P_{e,i}$) pour les noeuds respectifs (N1, N2,..., N7) sont autorisées dans une première plage de tolérance prédéfinie (TB1) et des fluctuations d'un second type ($\Delta P_{s,i}$) des estimations de puissance ($P_{e,i}$) pour les noeuds respectifs (N1, N2,..., N7) sont autorisées dans une seconde plage de tolérance prédéfinie (TB2), les fluctuations de premier type ($\Delta P_{f,i}$) devant être compensées par une puissance de régulation primaire ($P_{I,i}$) dans le réseau de courant et les fluctuations de second type ($\Delta P_{s,i}$) devant être compensées par une puissance de régulation secondaire ($P_{II,i}$) dans le réseau de courant, dans lequel le réseau de courant comporte un dispositif pour la commande, assistée par ordinateur, de la puissance selon la revendication 10 ou 11.

$$P_{e,i}\ \Delta P_{f,i}\ \Delta P_{s,i}$$
$$TB1\ TB2$$
$$P_{d,i}\ P_{I,i}\ P_{II,i}$$

FIG 1

**IN DER BESCHREIBUNG AUFGEFÜHRTE DOKUMENTE**

**In der Beschreibung aufgeführte Patentdokumente**

- US 20140265574 A1
- DE 102013221750 A1